# FASCICULE DE BREVET EUROPEEN

(11) **EP 0 679 327 B1**
(45) Date de publication et mention de la délivrance du brevet: **15.12.1999**
(21) Numéro de dépôt: 95440019.8
(22) Date de dépôt: 28.04.1995
(51) Int. Cl.: A01D 75/18, A01D 34/66

(54) **Faucheuse à dispositif de sécurité**
Mähmaschine mit einer Sicherheitsvorrichtung
Mower with a safety device

(30) Priorité: 29.04.1994 FR 9405429
(43) Date de publication de la demande: 02.11.1995
(73) Titulaire: KUHN S.A., F-67700 Saverne (FR)
(72) Inventeur: Kieffer, Fernand, F-67700 Saverne (FR); Walter, René, F-57620 Goetzenbruck (FR); Neuerburg, Horst, F-67700 Saverne (FR)

(56) Documents cités:
- EP-A- 0 512 602
- DE-A- 1 582 356
- FR-A- 1 265 333
- FR-A- 2 384 431
- GB-A- 822 604
- GB-A- 1 199 052
- NL-A- 9 002 867

## Description

La présente invention concerne une faucheuse comportant :
- un mécanisme de coupe s'étendant, au travail, transversalement à la direction de travail;
- une structure d'attelage destinée à être liée à un véhicule moteur;
- une poutre porteuse liée d'une part au mécanisme de coupe au moyen d'une première articulation d'axe dirigé vers l'avant et d'autre part à la structure d'attelage au moyen d'une deuxième articulation d'axe dirigé vers l'avant et d'une troisième articulation d'axe dirigé vers le haut, laquelle permet le pivotement de la deuxième articulation par rapport à la structure d'attelage;
   et
- un dispositif de sécurité maintenant le mécanisme de coupe dans sa position normale de travail, mais autorisant le pivotement de ce dernier vers l'arrière autour de l'axe de la troisième articulation en cas de heurt d'un obstacle, ce dispositif de sécurité comportant un accumulateur d'énergie et une bielle liée directement ou indirectement à la poutre porteuse ou au mécanisme de coupe au moyen d'une huitième articulation, et par l'intermédiaire de laquelle l'accumulateur d'énergie agit sur la poutre porteuse ou sur le mécanisme de coupe.

Une telle faucheuse est décrite dans le document **FR-A-2 384 431**. Le dispositif de sécurité de cette faucheuse connue comporte un ressort de traction. Celui-ci est articulé à l'une de ses extrémités, via une bielle, au mécanisme de coupe dans le voisinage de la première articulation liant ledit mécanisme de coupe à la poutre porteuse. A son autre extrémité, le ressort de traction est articulé sur un support solidaire de la structure d'attelage. Des barres, parallèles au ressort de traction, limitent l'allongement dudit ressort de traction.

En travail normal, le mécanisme de coupe qui est en contact avec le sol, suit le relief de ce dernier grâce à la première articulation liant le mécanisme de coupe à la poutre porteuse, et à la deuxième articulation liant la poutre porteuse à la structure d'attelage. Compte tenu de l'implantation du ressort de traction, une grande partie du poids du mécanisme de coupe est transférée sur la structure d'attelage et finalement sur le tracteur auquel est liée ladite structure d'attelage. De cette sorte, le mécanisme de coupe ne repose qu'avec une faible pression sur le sol comme cela est parfaitement connu dans la technique des faucheuses. Le ressort de traction remplit ainsi une première fonction d'allégement du mécanisme de coupe.

Lorsque le mécanisme de coupe heurte un obstacle se trouvant dans le champ, il pivote, conjointement avec la poutre porteuse, vers l'arrière autour de l'axe de la troisième articulation liant la deuxième articulation à la structure d'attelage. Ce faisant, le mécanisme de coupe tend le ressort de traction ce qui a pour effet d'alléger davantage le mécanisme de coupe, voire de tout simplement le soulever, et de faciliter ainsi, le cas échéant, son passage par-dessus l'obstacle. Lorsque l'obstacle n'agit plus sur le mécanisme de coupe, le ressort de traction ramène le mécanisme de coupe et la poutre porteuse dans leur position de travail normale. Le même ressort de traction remplit ainsi une deuxième fonction de sécurité en cas de heurt d'un obstacle et protège ainsi la faucheuse.

Ce dispositif de sécurité présente le grand avantage de se réarmer automatiquement dès que l'obstacle est franchi et/ou n'agit plus sur le mécanisme de coupe, contrairement à d'autres dispositifs de sécurité connus qui nécessitent toute une série de manoeuvres pour être réarmés en cas de déclenchement.

Ce dispositif de sécurité présente cependant l'inconvénient d'être très sensible à la configuration du sol. En effet, les terrains à faucher ne sont pas des surfaces rigoureusement planes, mais comportent une multitude de bosses plus ou moins grandes. Or, le dispositif de sécurité réagit presque à chacune de ces bosses ce qui entraîne, de manière quasi permanente, des petits pivotements du mécanisme de coupe et de la poutre porteuse autour de l'axe de la troisième articulation. Ce fonctionnement continuel est préjudiciable à la qualité de la coupe et occasionne des vibrations néfastes pour la durée de vie de la faucheuse et très gênantes pour le conducteur du tracteur étant donné qu'elles sont transmises au tracteur via la structure d'attelage.

Un autre inconvénient de ce dispositif de sécurité réside dans le fait que, lors de l'accrochage d'un obstacle, les efforts engendrés dans les divers éléments de la faucheuse augmentent proportionnellement à l'angle de pivotement du mécanisme de coupe.

Dans le document **GB 1,199,052** est également décrite une faucheuse comportant :
- un mécanisme de coupe s'étendant, au travail, transversalement à la direction de travail,
- une structure d'attelage destinée à être liée à un véhicule moteur, et
- un châssis lié d'une part au mécanisme de coupe au moyen d'une première articulation d'axe dirigé vers l'avant et d'autre part à la structure d'attelage au moyen d'une deuxième articulation d'axe également dirigé vers l'avant.

Le châssis de cette faucheuse est constitué :
- d'une première poutre liée à la structure d'attelage au moyen de la deuxième articulation,
- d'une chape à laquelle est lié le mécanisme de coupe au moyen de ladite première articulation,
- d'une deuxième poutre liée d'une part à la première poutre à l'aide d'une troisième articulation d'axe vertical et d'autre part à la chape au moyen d'une autre articulation d'axe également vertical,
- d'une bielle liée d'une part à la chape au moyen d'une articulation d'axe vertical et d'autre part à la première poutre à l'aide d'une articulation d'axe également vertical.

La première poutre, la deuxième poutre, la chape et la bielle constituent ainsi un parallélogramme déformable permettant au mécanisme de coupe de pivoter vers l'arrière en cas de rencontre d'un obstacle au cours du travail ou d'être pivoté vers l'arrière pour être placé en position de transport.

Le maintien du mécanisme de coupe dans sa position de travail est réalisé par un dispositif de sécurité.

Celui-ci se compose tout d'abord d'un bras pivotable autour de l'articulation liant la bielle à la première poutre, mais maintenu dans sa position normale par une biellette articulée par ailleurs sur la deuxième poutre. Ce bras présente un logement et une piste courbe.

Le dispositif de sécurité comporte ensuite un organe de retenue articulé sur la bielle et muni d'une projection introduite dans le logement du bras.

Le dispositif de sécurité comporte enfin encore un ressort de compression implanté entre la bielle et l'organe de retenue, et destiné à maintenir la projection de l'organe de retenue dans le logement du bras.

Si, au cours du travail, le mécanisme de coupe rencontre un obstacle, l'effort exercé par cet obstacle sur le mécanisme de coupe est transmis au parallélogramme déformable. Dès que cet effort dépasse une certaine valeur, la projection s'extrait du logement du bras, ce qui permet au mécanisme de coupe de pivoter librement vers l'arrière par suite de la déformation du parallélogramme.

Pour réenclencher le dispositif de sécurité, il faudra arrêter le véhicule moteur et faire marche arrière jusqu'à ce que la projection de l'organe de retenue soit à nouveau logée dans le logement du bras.

L'objectif de la présente invention est de remédier aux inconvénients du dispositif de sécurité de la faucheuse connue par le document FR-A-2 384 431, tout en conservant l'avantage du réarmement automatique lorsque l'obstacle est franchi et/ou n'agit plus sur le mécanisme de coupe.

A cet effet, la faucheuse selon la présente invention, qui comprend :
- un mécanisme de coupe s'étendant, au travail, transversalement à la direction de travail;
- une structure d'attelage destinée à être liée à un véhicule moteur;
- une poutre porteuse liée d'une part au mécanisme de coupe au moyen d'une première articulation d'axe dirigé vers l'avant et d'autre part à la structure d'attelage au moyen d'une deuxième articulation d'axe dirigé vers l'avant et d'une troisième articulation d'axe dirigé vers le haut, laquelle permet le pivotement de la deuxième articulation par rapport à la structure d'attelage ;
   et
- un dispositif de sécurité maintenant le mécanisme de coupe dans sa position normale de travail, mais autorisant le pivotement de ce dernier vers l'arrière autour de l'axe de la troisième articulation en cas de heurt d'un obstacle, ce dispositif de sécurité comportant un accumulateur d'énergie et une bielle liée directement ou indirectement à la poutre porteuse ou au mécanisme de coupe au moyen d'une huitième articulation, et par l'intermédiaire de laquelle l'accumulateur d'énergie agit sur la poutre porteuse ou sur le mécanisme de coupe;
   est caractérisée eu ce que :
   a) ledit dispositif de sécurité comporte en sus un organe pivotant lié à la structure d'attelage au moyen d'une quatrième articulation ;
   b) ladite bielle est liée d'une part directement ou indirectement à la poutre porteuse ou au mécanisme de coupe avec un premier bras de levier par rapport à l'axe de la troisième articulation et d'autre part a' l'organe pivotant au moyen d'une cinquième articulation ;
   c) l'accumulateur d'énergie est lié à l'organe pivotant au moyen d'une liaison de telle sorte à agir sur l'organe pivotant avec un second bras de levier, cette liaison qui comporte une sixième articulation, étant capable :
      - de maintenir ladite sixième articulation dans une première position éloignée de la quatrième articulation jusqu'à un certain angle de pivotement du mécanisme de coupe vers l'arrière,
      - de déplacer ladite sixième articulation dans une deuxième position rapprochée de la quatrième articulation à partir dudit angle de pivotement.

Dans la faucheuse selon la présente invention, l'accumulateur d'énergie agit sur l'organe pivotant avec un certain bras de levier (second bras de levier) et oblige ainsi ledit organe pivotant à agir à son tour sur la bielle laquelle transmet l'effort à la poutre porteuse et/ou au mécanisme de coupe pour, en définitive, maintenir le mécanisme de coupe dans sa position normale de travail

Compte tenu de la cinématique du dispositif de sécurité, le mécanisme de coupe est maintenu fermement dans sa position normale de travail. Le phénomène de pivotement continuel apparaissant sur la faucheuse de l'art antérieur est inexistant.

Dans cette position, ledit mécanisme de coupe peut, grâce à la première articulation et à la deuxième articulation, se déplacer en hauteur pour suivre le relief du terrain à faucher.

Si, au cours du travail, le mécanisme de coupe heurte un obstacle se trouvant dans le champ et si l'effort sur le mécanisme de coupe, qui en résulte, dépasse le seuil prédéterminé, le mécanisme de coupe pivote conjointement avec la poutre porteuse vers l'arrière autour de l'axe de la troisième articulation liant la deuxième articulation à la structure d'attelage. Ce faisant, le mécanisme de coupe ou la poutre porteuse agit sur l'organe pivotant vis la bielle en le faisant pivoter autour de l'axe de la quatrième articulation. L'organe pivotent agit ainsi à sort tour sur l'accumulateur d'énergie ce qui a pour effet d'augmenter l'effort exercé par l'accumulateur d'énergie et, en définitive, les efforts sur le mécanisme de coupe augmentent en fonction de l'angle de pivotement de celui-ci,

Si l'obstacle peut être franchi au cours de cette première phase du déclenchement dans laquelle la sixième articulation est maintenue dans sa première position éloignée de la quatrième articulation, l'accumulateur d'énergie ramènera à nouveau le mécanisme de coupe dans sa position normale de travail dès que ledit obstacle n'agira plus sur le mécanisme de coupe.

Si l'obstacle ne peut pas être franchi durant la première phase, le pivotement du mécanisme de coupe vers l'arrière se poursuit jusqu'à ce que l'angle de pivotement du mécanisme de coupe atteigne une valeur prédéterminée. Dès que cet angle limite est atteint, la liaison liant l'accumulateur d'énergie à l'organe pivotant diminue le bras de levier (second bras de levier) avec lequel l'accumulateur d'énergie agit sur l'organe pivotant, en déplaçant la sixième articulation dans sa deuxième position rapprochée de la quatrième articulation. C'est le début de la deuxième phase du déclenchement. Cette diminution du bras de levier entraîne une redistribution des forces dans le dispositif de sécurité et a pour conséquence une diminution importante de la force nécessaire pour poursuivre l'effacement du mécanisme de coupe devant l'obstacle par poursuite du pivotement vers l'arrière autour de l'axe de la troisième articulation.

Par des choix judicieux de la position relative des diverses articulations du dispositif de sécurité, la force nécessaire pour poursuivre le pivotement du mécanisme de coupe durant la deuxième phase peut demeurer au moins sensiblement constante, voire diminuer, bien que l'énergie emmagasinée par l'accumulateur d'énergie continue d'augmenter. Ceci est bénéfique pour la tenue des divers éléments de la faucheuse.

Dès que l'obstacle n'agira plus sur le mécanisme de coupe, l'énergie emmagasinée par l'accumulateur d'énergie ramènera le mécanisme de coupe dans sa position normale de travail De même, la liaison liant l'accumulateur d'énergie à l'organe pivotant retournera également dans sa position normale de travail.

Selon une autre caractéristique de l'invention, il pourra être prévu que l'axe de la sixième articulation soit avantageusement au moins sensiblement parallèle à l'axe de la quatrième articulation.

Dans une réalisation, ladite liaison pourra comporter en sus une rainure permettant la modification de la position de ladite sixième anticulation par rapport à la quatrième articulation.

Ladite liaison pourra de surcroît comporter au moins un galet dont l'axe de rotation constituera l'axe de la sixième articulation et qui roulera dans la rainure. Dans ce cas, il sera même avantageux que la liaison comporte au moins un galet de part et d'autre de la direction de l'effort exercé par l'accumulateur d'énergie, ces galets étant destinés chacun à rouler sur une piste correspondante de la rainure. Préférentiellement, il sera même prévu que ces galets s'étendent au moins sensiblement symétriquement de part et d'autre de la direction de l'effort exercé par l'accumulateur d'énergie.

Dans une autre réalisation, ladite liaison pourra comporter en sus un levier pivotant lié à l'organe pivotant au moyen d'une articulation et auquel sera lié l'accumulateur d'énergie au moyen de la sixième articulation qui sera prévue au-delà de ladite articulation. Le pivotement dudit levier pivotant par rapport à l'organe pivotant autour de l'axe de ladite articulation sera limité par deux butées solidaires de l'organe pivotant. L'axe de cette articulation sera d'ailleurs avantageusement au moins sensiblement parallèle à l'axe de la quatrième articulation.

Il pourra du reste être avantageusement prévu que la droite passant d'une part par l'axe de la sixième articulation lorsque celle-ci se trouve dans sa première position extrême et d'autre part par l'axe de la sixième articulation lorsque celle-ci se trouve dans sa deuxième position extrême, coupe au moins sensiblement l'axe de la quatrième articulation. Il pourra par ailleurs être prévu que l'axe géométrique coupant l'axe de la quatrième articulation et l'axe de la cinquième articulation forme un angle obtus avec ladite droite. Avantageusement, cet angle obtus sera, en position normale de travail, ouvert vers le côté opposé à celui où s'étend le mécanisme de coupe. Il pourra de surcroît être avantageusement prévu qu'en travail normal, ladite droite forme, avec la direction de l'effort exercé par l'accumulateur d'énergie, un angle quelque peu supérieur à 90°.

Il pourra également être avantageusement prévu que la position de travail normale de la sixième articulation par rapport à la quatrième articulation soit réglable au moyen d'un dispositif de réglage. Préférentiellement, ce dispositif de réglage règlera essentiellement le bras de levier avec lequel agit l'accumulateur d'énergie sur l'organe pivotant (second bras de levier). Il sera ainsi possible de régler la valeur du seuil à partir duquel le mécanisme de coupe débutera la première phase du déclenchement.

Il pourra de surcroît être avantageusement prévu que la direction de l'effort exercé par l'accumulateur d'énergie coupe au moins sensiblement orthogonalement l'axe de la sixième articulation.

Selon une autre caractéristique de l'invention, il pourra être prévu que l'accumulateur d'énergie soit lié directement ou indirectement à la structure d'attelage ou à la poutre porteuse ou encore au mécanisme de coupe au moyen d'une septième articulation dont l'axe pourra être avantageusement au moins sensiblement parallèle à l'axe de la quatrième articulation.

Il pourra du reste être prévu que la septième articulation s'étende dans le voisinage de la troisième articulation et, de préférence, au-delà de ladite troisième articulation, du côté du mécanisme de coupe.

Lorsque la liaison liant l'accumulateur d'énergie à l'organe pivotant comporte une sixième articulation, il pourra par ailleurs être très avantageusement prévu qu'en position normale de travail, l'axe de la troisième articulation, l'axe de la sixième articulation et l'axe de la septième articulation soient au moins sensiblement alignés.

Selon une autre caractéristique de l'invention, il pourra être prévu que l'axe de la huitième articulation soit au moins sensiblement parallèle à l'axe de la quatrième articulation.

Il pourra du reste être prévu que l'axe géométrique coupant l'axe de la troisième articulation et l'axe de la huitième articulation forme un angle obtus avec l'axe longitudinal du mécanisme de coupe.

Selon une autre caractéristique de l'invention, il pourra être prévu que l'axe de la quatrième articulation soit dirigé vers le haut et sera, de préférence, au moins sensiblement vertical. Il pourra du reste être prévu que l'axe de la quatrième articulation soit au moins sensiblement parallèle à l'axe de la troisième articulation.

Selon une autre caractéristique de l'invention, il pourra être prévu qu'en position normale de travail, l'accumulateur d'énergie et la bielle s'étendent transversalement à la direction de travail, de préférence au moins sensiblement parallèlement au mécanisme de coupe.

Selon une autre caractéristique de l'invention, il pourra être prévu que l'organe pivotant puisse pivoter autour de l'axe de la quatrième articulation suivant une certaine plage angulaire déterminée. Dans ce cas, ladite plage angulaire pourra être avantageusement déterminée par des butées solidaires de la structure d'attelage et destinées à collaborer avec l'organe pivotant.

Selon une autre caractéristique de l'invention, il pourra être prévu que la deuxième articulation et la troisième articulation s'étendent dans le voisinage l'une de l'autre, leurs axes étant de préférence sécants.

Selon une autre caractéristique de l'invention, il pourra être avantageusement prévu que l'angle de pivotement du mécanisme de coupe à partir duquel le bras de levier avec lequel agit l'accumulateur d'énergie sur l'organe pivotant (second bras de levier) est diminué, ait une valeur d'une dizaine de degrés environ.

Selon une autre caractéristique de l'invention, il pourra être prévu que l'accumulateur d'énergie comporte un vérin et un accumulateur de pression. Dans ce cas, il sera avantageusement prévu que la pression de gonflage de l'accumulateur de pression soit réglable.

Selon une autre caractéristique de l'invention, il pourra être prévu que la bielle soit constituée d'un vérin. Ainsi, le mécanisme de coupe pourra être placé en position de transport par pivotement autour de l'axe de la troisième articulation. Dans ce cas, il sera avantageusement prévu que le pivotement du mécanisme de coupe vers l'avant ou vers l'avant et vers l'arrière soit limité par une butée respective. Il sera du reste avantageusement prévu qu'en position de transport, le pivotement du mécanisme de coupe autour de l'axe de la première articulation et le pivotement de la poutre porteuse autour de l'axe de la deuxième articulation soient bloqués. De préférence, rence, ce blocage se fera automatiquement lors du pivotement en position de transport.

Selon une autre caractéristique de l'invention, il pourra être prévu que l'accumulateur d'énergie soit lié directement ou indirectement à la poutre porteuse ou au mécanisme de coupe au moyen d'une septième articulation dont la position par rapport à la deuxième articulation soit telle que ledit accumulateur d'énergie réduise la pression avec laquelle le mécanisme de coupe repose au sol.

Le dispositif de sécurité remplit ainsi également une fonction d'allégement du mécanisme de coupe. Il pourra d'ailleurs être avantageusement prévu que durant la deuxième phase du déclenchement, l'effort exercé par l'accumulateur d'énergie devienne suffisant pour décoller le mécanisme de coupe du sol et le soulever de sorte qu'il puisse, selon la nature de l'obstacle, passer par-dessus celui-ci.

Selon une autre caractéristique de l'invention, il pourra être prévu que la poutre porteuse soit liée à la structure d'attelage au moyen d'une pièce intermédiaire elle-même liée à la structure d'attelage au moyen de la deuxième articulation, la poutre porteuse étant liée à cette pièce intermédiaire au moyen d'une neuvième articulation d'axe dirigé vers l'avant. La poutre porteuse conjointement avec le mécanisme de coupe pourra ainsi être pivotée vers le haut en position de transport autour de l'axe de ladite neuvième articulation.

Il pourra du reste être prévu que l'accumulateur d'énergie soit lié directement ou indirectement à la pièce intermédiaire au moyen d'une septième articulation et que le pivotement de la poutre porteuse par rapport à la pièce intermédiaire autour de l'axe de la neuvième articulation soit limité au moins vers le bas par une butée. De cette sorte, l'accumulateur d'énergie pourra également, dans cette forme de réalisation, réduire la pression avec laquelle le mécanisme de coupe repose sur le sol pendant le travail.

Il pourra par ailleurs être prévu qu'un organe de manoeuvre soit implanté entre la pièce intermédiaire et la poutre porteuse pour faire pivoter la poutre porteuse et le mécanisme de coupe vers le haut autour de l'axe de la neuvième articulation. Cet organe de manoeuvre pourra avantageusement être un vérin.

Selon une autre caractéristique de l'invention, il pourra être avantageusement prévu que l'axe de la première articulation et/ou l'axe de la deuxième articulation et/ou l'axe de la neuvième articulation soit (soient) au moins sensiblement dirigé(s) suivant la direction de travail.

D'autres caractéristiques et avantages de la présente invention ressortent de la description suivante de quelques exemples de réalisation non limitatifs faite en référence au dessin annexé sur lequel :
- la figure 1 représente une vue de dessus d'une faucheuse selon un premier exemple de réalisation, ladite faucheuse étant en position normale de travail ;
- la figure 2 représente une vue arrière de la faucheuse de la figure 1 ;
- la figure 3 représente une vue de dessus de la faucheuse des figures 1 et 2, ladite faucheuse étant en position de transport ;
- la figure 4 représente, à une échelle agrandie, une vue partielle de l'organe pivotant coupé suivant le plan IV défini sur la figure 2 ;
- la figure 5 représente, à une échelle agrandie, une vue de la deuxième articulation, de la troisième articulation et de la huitième articulation partiellement coupées suivant le plan V défini sur la figure 1 ;
- la figure 6 représente une vue en plan schématique du dispositif de sécurité (et d'allégement) de la faucheuse des figures 1 à 5 lorsque le mécanisme de coupe est en position normale de travail ;
- la figure 7 représente une vue en plan schématique dudit dispositif de sécurité (et d'allégement) lorsque le mécanisme de coupe arrive à la fin de la première phase du déclenchement (traits discontinus) et débute la deuxième phase du déclenchement (traits forts) ;
- la figure 8 représente une vue en plan schématique dudit dispositif de sécurité (et d'allégement) lorsque le mécanisme de coupe arrive à la fin de la deuxième phase du déclenchement (déclenchement total) ;
- la figure 9 représente une vue en plan schématique dudit dispositif de sécurité (et d'allégement) lorsque le mécanisme de coupe est en position de transport ;
- la figure 10 représente une vue de dessus d'une faucheuse selon un deuxième exemple de réalisation, ladite faucheuse étant en position normale de travail ;
- la figure 11 représente une vue arrière de la faucheuse de la figure 10 ;
- la figure 12 représente une vue arrière de la faucheuse des figures 10 et 11, ladite faucheuse étant en position de transport ;
- la figure 13 représente, à une échelle agrandie, un autre exemple de réalisation de l'organe pivotant ; et
- la figure 14 représente, à une échelle agrandie, un autre exemple de réalisation de la liaison de l'accumulateur d'énergie à l'organe pivotant.

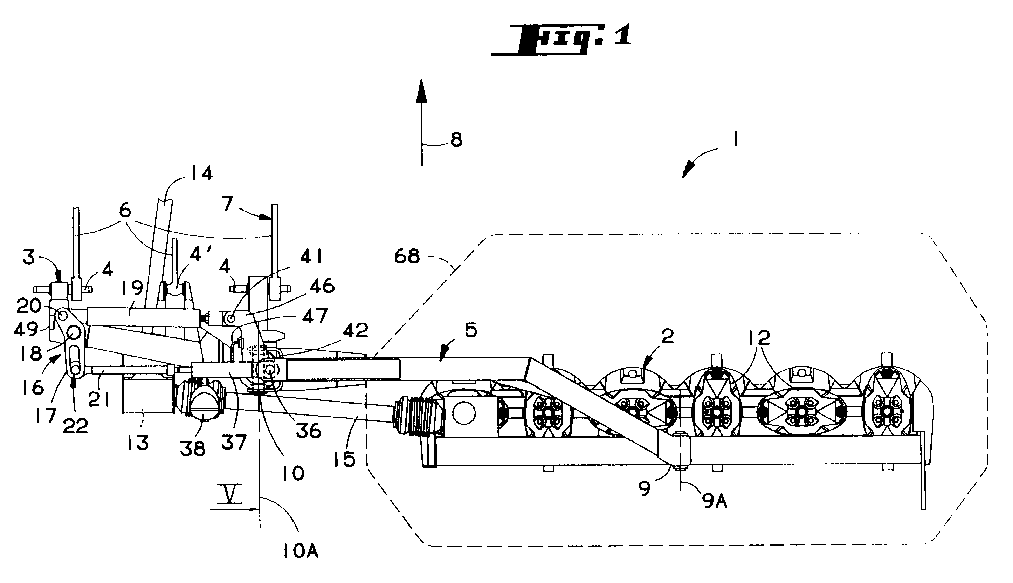

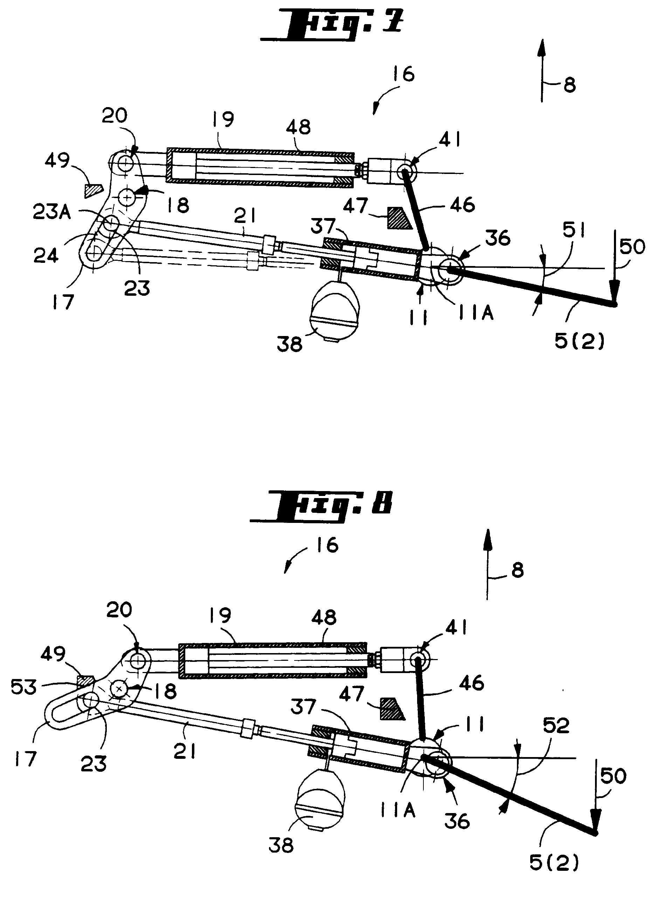

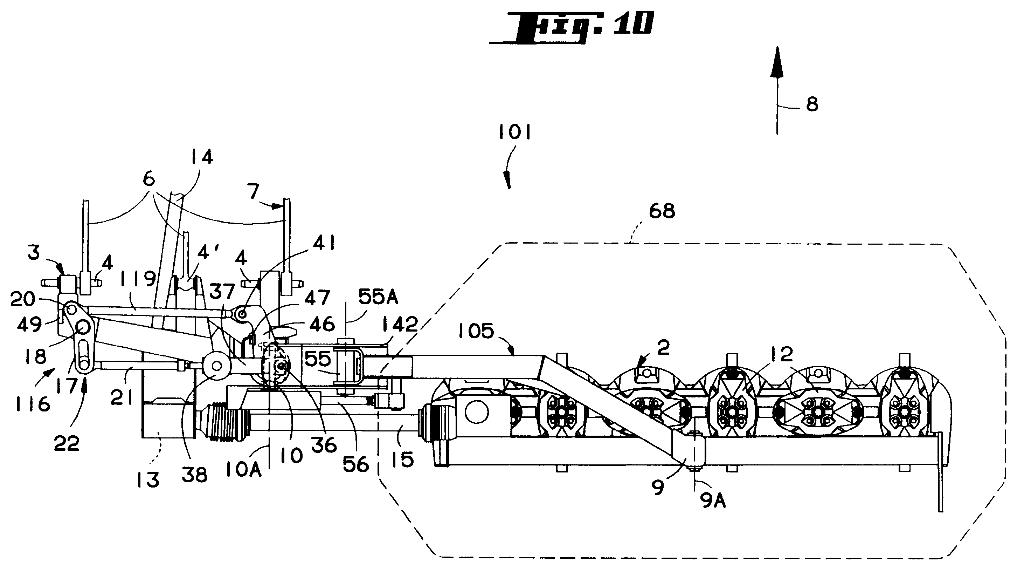

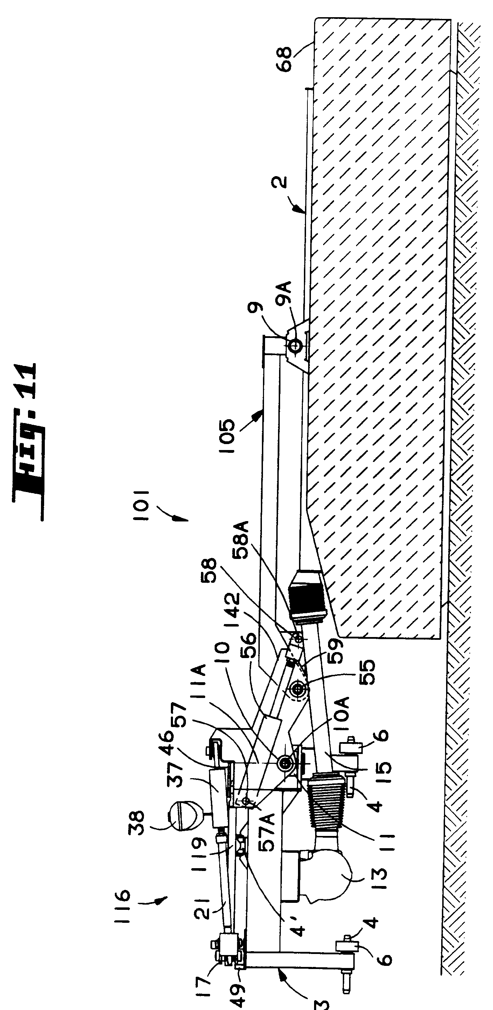

La faucheuse (1), telle que représentée sur les figures 1 à 9, comporte un mécanisme de coupe (2), une structure d'attelage (3) à trois points d'attelage (4, 4') et une poutre porteuse (5) liant le mécanisme de coupe (2) à la structure d'attelage (3).

Au travail, la faucheuse (1) est attelée, au moyen de la structure d'attelage (3), au dispositif (6) d'attelage à trois points d'un véhicule moteur (7) (seul le dispositif d'attelage (6) de celui-ci a été représenté) de telle sorte que le mécanisme de coupe (2) s'étende, vu suivant la direction de travail (8), latéralement à côte de la voie dudit véhicule moteur (7) et transversalement à la direction de travail (8) (dans l'exemple représenté, le mécanisme de coupe (2) s'étend même au moins sensiblement orthogonalement à la direction de travail (8)).

Le mécanisme de coupe (2) ne sera pas décrit en détail : il peut en effet s'agir de n'importe quel type de mécanisme de coupe (dans l'exemple représenté, il s'agit d'un mécanisme de coupe communément appelé "à disques").

Ce mécanisme de coupe (2) est lié à la poutre porteuse (5) au moyen d'une première articulation (9) du type pivot d'axe (9A) dirigé vers l'avant lorsque le mécanisme de coupe (2) est en position normale de travail (dans l'exemple représenté, l'axe (9A) est au moins sensiblement dirigé suivant la direction de travail (8), de préférence même légèrement incliné vers l'avant et vers le bas). Cette première articulation (9) s'étend du reste au moins sensiblement dans le plan vertical dirigé suivant la direction de travail (8) et contenant le centre des masses du mécanisme de coupe (2). Elle s'étend par ailleurs à la partie supérieure du mécanisme de coupe (2) et permet à ce dernier de pivoter d'un certain angle par rapport à la poutre porteuse (5) dans un plan orthogonal à l'axe (9A) de ladite articulation (9).

La poutre porteuse (5), quant à elle, est liée à la structure d'attelage (3) au moyen d'une deuxième articulation (10) et d'une troisième articulation (11) de telle sorte que cette dernière permette le pivotement de la deuxième articulation (10) conjointement avec la poutre porteuse (5) par rapport à la structure d'attelage (3). Cette deuxième articulation (10) est une articulation du type pivot d'axe (10A) dirigé vers l'avant lorsque le mécanisme de coupe (2) est en position normale de travail (dans l'exemple représenté, l'axe (10A) est au moins sensiblement dirigé suivant la direction de travail (8)). En vue suivant la direction de travail (8), il apparaît du reste que la deuxième articulation (10) s'étend au moins sensiblement au même niveau, par rapport au sol, que la première articulation (9). La troisième articulation (11) est également une articulation, du type pivot, mais d'axe (11A) dirigé vers le haut (dans l'exemple représenté, l'axe (11A) est au moins sensiblement vertical). Il apparaît par ailleurs que l'axe (10A) de la deuxième articulation (10) et l'axe (11A) de la troisième articulation (11) sont au moins sensiblement sécants.

Cette première articulation (9) et cette deuxième articulation (10) permettent au mécanisme de coupe (2) de suivre le relief du sol lors de la coupe.

L'animation des organes de coupe (12) du mécanisme de coupe (2) est réalisée par une source motrice qui est, dans l'exemple représenté, constituée par la prise de force (non représentée) du véhicule moteur (7). Toute autre source motrice est cependant envisageable. Celle-ci transmel le mouvement à un carter de renvoi (13) au moyen d'un premier arbre de transmission télescopique (14) à joints universels. Le carter de renvoi (13) est fixé sur la structure d'attelage (3) et s'étend, en vue suivant la direction de travail (8), entre les deux points d'attelage inférieurs (4) de ladite structure d'attelage (3). Ce carter de renvoi (13) transmet lui-même le mouvement aux organes de coupe (12) du mécanisme de coupe (2) au moyen d'un deuxième arbre de transmission télescopique (15) à joints universels, qui s'étend transversalement à la direction de travail (8). Il apparaît par ailleurs que la deuxième articulation (10) et la troisième articulation (11) s'étendent dans le voisinage et quelque peu plus haut que le joint universel de l'arbre de transmission télescopique (15) situé du côté du carter de renvoi (13).

La faucheuse (1) comporte aussi un dispositif (16) de sécurité. Celui-ci maintient le mécanisme de coupe (2) dans sa position normale de travail, mais autorise le pivotement de ce dernier, conjointement avec la poutre porteuse (5), vers l'arrière autour de l'axe (11A) de la troisième articulation (11) au cas où le mécanisme de coupe (2) heurtait, pendant le travail, un obstacle se trouvant dans le

Ce dispositif (16) de sécurité comporte un organe pivotant (17) lié à la structure d'attelage (3) au moyen d'une quatrième articulation (18) du type pivot d'axe (18A) dirigé vers le haut (dans l'exemple représenté, l'axe (18A) est au moins sensiblement parallèle à l'axe (11A) de la troisième articulation (11)).

Le dispositif (16) de sécurité comporte par ailleurs une bielle (19) liée à l'organe pivotant (17) au moyen d'une cinquième articulation (20) d'axe (20A) au moins sensiblement parallèle à l'axe (18A) de la quatrième articulation (18).

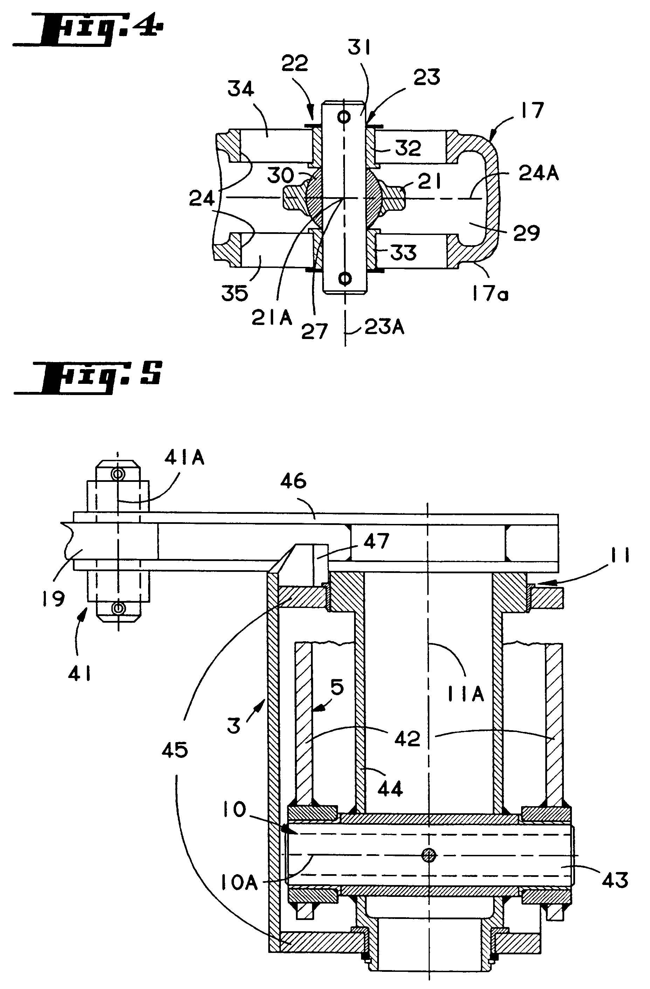

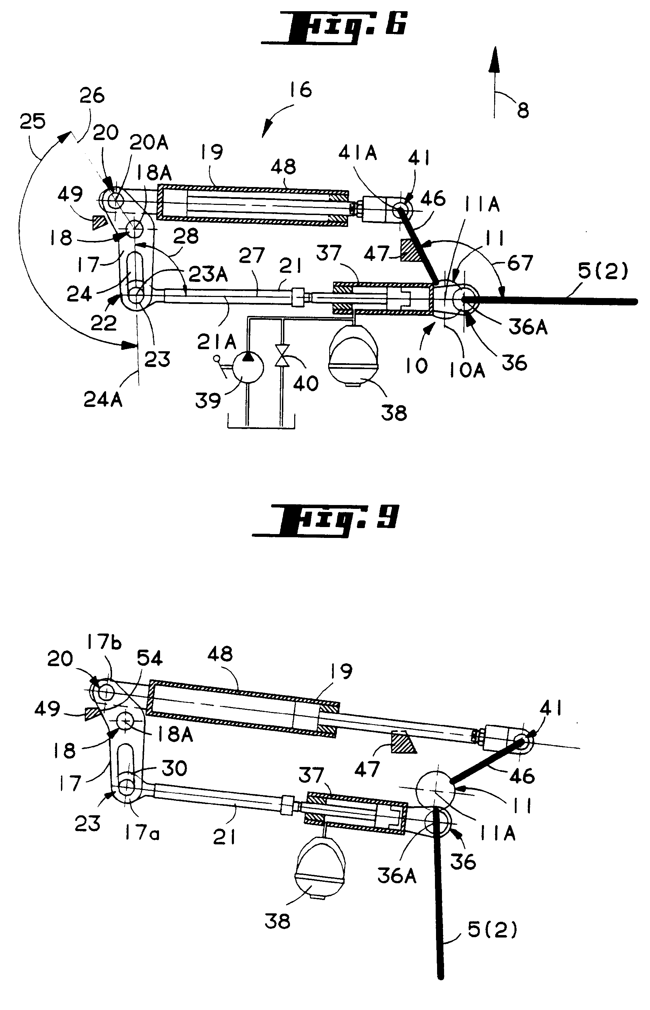

Le dispositif (16) de sécurité comporte également un accumulateur d'énergie (21) qui est lié à l'organe pivotant (17) au moyen d'une liaison (22) de manière que la quatrième articulation (18) s'étende, en quelque sorte, entre la cinquième articulation (20) et la liaison (22). L'organe pivotant (17) forme ainsi une espèce de levier pivotant à deux bras (17a, 17b). Ladite liaison (22) comporte une sixième articulation (23) d'axe (23A) au moins sensiblement parallèle à l'axe (18A) de la quatrième articulation (18), et une rainure (24) permettant la modification de la position de cette sixième articulation (23) par rapport à la quatrième articulation (18). L'axe (24A) de cette ramure (24) coupe au moins sensiblement l'axe (18A) de la quatrième articulation (18) et forme un angle obtus (25) avec l'axe géométrique (26) coupant l'axe (18A) de la quatrième articulation (18) et l'axe (20A) de la cinquième articulation (20). Dans l'exemple représenté, cet angle obtus (25) a une valeur d'environ 150°. Il apparaît du reste, qu'au moins dans la position normale de travail (figures 1 et 6), l'angle obtus (25) est ouvert vers le côté opposé à celui où s'étend le mécanisme de coupe (2). Il apparaît par ailleurs, qu'en position normale de travail (figures 1 et 6), l'axe (24A) de la rainure (24) forme, avec la direction (27) de l'effort exercé par l'accumulateur d'énergie (21), un angle (28) quelque peu supérieur à 90°.

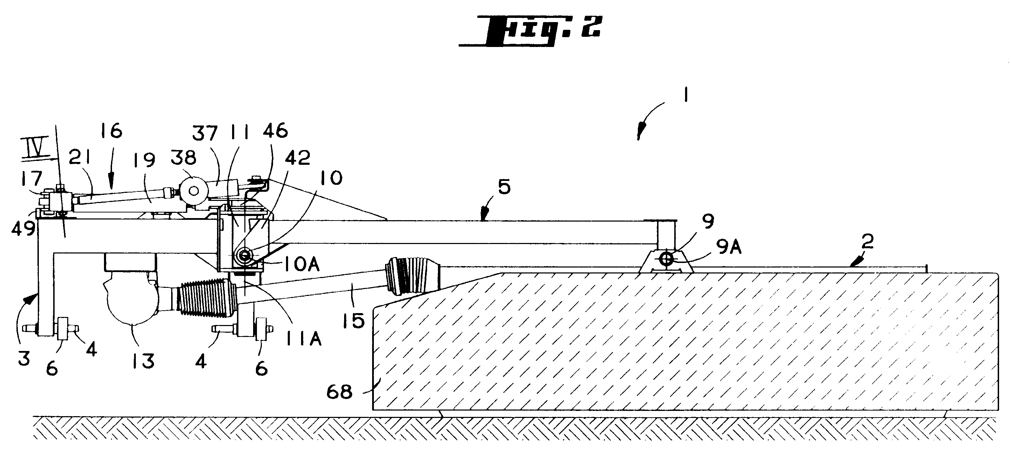

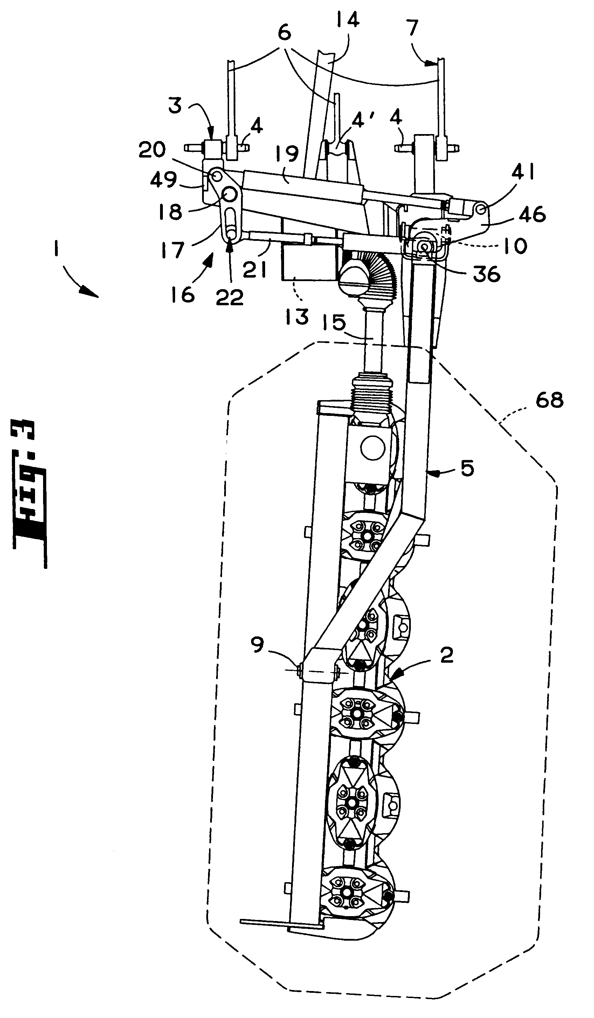

Tel que visible sur la figure 4, le bras (17a) de l'organe pivotant (17) présente un évidement (29) dans lequel pénètre l'extrémité correspondante de l'accumulateur d'énergie (21). Cette extrémité comporte une rotule (30) montée sur un axe (31). De part et d'autre de cette rotule (30) est prévu un galet (32, 33) également monté sur l'axe (31) et destiné à pouvoir rouler sur une piste (34, 35) correspondante que comporte la rainure (24). L'axe de rotation de ces galets (32, 33) qui correspond à l'axe longitudinal de l'axe (31) et à un axe géométrique de la rotule (30), constitue l'axe (23A) de la sixième articulation (23), et les pistes (34, 35) s'étendent au moins sensiblement orthogonalement à cet axe (23A). Du reste, il apparaît que la direction (27) de l'effort exercé par l'accumulateur d'énergie (21) est, dans cet exemple de réalisation, au moins sensiblement confondu avec l'axe longitudinal (21A) de l'accumulateur d'énergie (21). Il apparaît par ailleurs que cette direction (27) coupe au moins sensiblement orthogonalement l'axe (23A) de la sixième articulation (23) et que les galets (32, 33) s'étendent au moins sensiblement symétriquement par rapport à ladite direction (27).

A son autre extrémité, l'accumulateur d'énergie (21) est lié à la poutre porteuse (5) au moyen d'une septième articulation (36) d'axe (36A) au moins sensiblement parallèle à l'axe (18A) de la quatrième articulation (18) et ceci au moins lorsque le mécanisme de coupe (2) se trouve dans la position représentée sur la figure 2. Cette septième articulation (36) s'étend dans le voisinage de la troisième articulation (11). En fait, elle s'étend même quelque peu au-delà de la troisième articulation (11), du côté du mécanisme de coupe (2). Il apparaît du reste, que dans la position normale de travail (figures 1 et 6), l'axe (11A) de la troisième articulation (11), l'axe (23A) de la sixième articulation (23) et l'axe (36A) de la septième articulation (36) sont, en vue suivant l'axe (18A) de la quatrième articulation (18), au moins sensiblement alignés. Sur la figure 2, il apparaît aussi que la septième articulation (36) s'étend au-dessus de la deuxième articulation (10). L'effort exercé par l'accumulateur d'énergie (21) crée ainsi un moment par rapport à l'axe (10A) de la deuxième articulation (10), qui a pour effet de réduire la pression avec laquelle le mécanisme de coupe (2) repose sur le sol. Le dispositif (16) remplit ainsi une fonction d'allégement du mécanisme de coupe (2).

Dans cet exemple de réalisation, l'accumulateur d'énergie (21) est constitué d'un vérin hydraulique (37) et d'un accumulateur de pression (38) branché sur la petite chambre du vérin (37). La pression de gonflage de l'accumulateur de pression (38) peut être augmentée au moyen d'une pompe (39) ou diminuée au moyen d'un robinet (40).

La bielle (19), quant à elle, est liée à la poutre porteuse (5) (c'est-à-dire indirectement au mécanisme de coupe (2)) au moyen d'une huitième articulation (41) d'axe (41A) au moins sensiblement parallèle à l'axe (18A) de la quatrième articulation (18). Cette huitième articulation (41) s'étend à une certaine distance de la troisième articulation (11) de telle sorte que la bielle (19) puisse agir avec un certain bras de levier (premier bras de levier) par rapport à l'axe (11A) de ladite troisième articulation (11). Il apparaît du reste que l'axe géométrique coupant l'axe (11A) de la troisième articulation (11) et l'axe (41A) de la huitième articulation (41) forme un angle obtus (67) avec l'axe longitudinal du mécanisme de coupe (2). Cet angle obtus (67) est, en travail normal, ouvert vers l'avant.

En fait, la bielle (19) est liée indirectement à la poutre porteuse (5) tel que cela apparaît sur la figure 5. La poutre porteuse (5) comporte une chape (42) par l'intermédiaire de laquelle elle peut pivoter sur les deux extrémités d'un axe fixe (43) dont l'axe longitudinal constitue l'axe (10A) de la deuxième articulation (10). Cet axe fixe (43) est solidaire d'un axe tubulaire (44) qui s'étend entre les deux ailes de la chape (42) de la poutre porteuse (5) et qui peut pivoter dans une chape (45) de la structure d'attelage (3). L'axe longitudinal de cet axe tubulaire (44) constitue l'axe (11A) de la troisième articulation (11). A son extrémité supérieure s'étendant en-dehors de la chape (45), l'axe tubulaire (44) est pourvu d'un bras (46) à l'extrémité duquel est liée la bielle (19) au moyen de la huitième articulation (41).

La position normale de travail du mécanisme de coupe (2) (figures 1 et 6) est définie par une butée (47). Dans l'exemple représenté, cette butée (47) est solidaire de la structure d'attelage (3) et est implantée de sorte à stopper le pivotement du bras (46) de l'axe tubulaire (44) autour de l'axe (11A) de la troisième articulation (11) lorsque le mécanisme de coupe (2) atteint la position normale de travail. Il est bien entendu que cette butée pourrait être implantée ailleurs dès lors qu'elle arrête le pivotement du mécanisme de coupe (2) lorsque celui-ci atteint la position normale de travail.

Dans l'exemple représenté, la bielle (19) est constituée d'un vérin hydraulique (48) double effet. L'animation du vérin (48) peut être assurée par une source hydraulique (non représentée) telle que la centrale hydraulique du véhicule moteur (7) par exemple.

Une autre butée (49), également solidaire de la structure d'attelage (3), est prévue dans le voisinage de l'organe pivotant (17). Elle est destinée à déterminer la plage angulaire suivant laquelle peut pivoter ledit organe pivotant (17) autour de l'axe (18A) de la quatrième articulation (18).

La faucheuse qui vient d'être décrite, fonctionne comme suit. Avant de commencer le fauchage, le mécanisme de coupe (2) est pivoté dans sa position normale de travail (figures 1, 2 et 6). Pour ce faire, on alimente le vérin hydraulique (48) de sorte à le raccourcir ce qui a pour effet de solliciter l'accumulateur d'énergie (21) à l'allongement et par réaction de faire pivoter la poutre porteuse (5) et le mécanisme de coupe (2) autour de l'axe (11A) de la troisième articulation (11). Le pivotement est stoppé lorsque le bras (46) arrive en contact avec la butée (47). Dans cette position, l'accumulateur d'énergie (21) a emmagasiné une certaine énergie, la sixième articulation (23) se trouve dans sa position la plus éloignée de la quatrième articulation (18) et la longueur du vérin (48) constituant la bielle (19) est invariable. L'accumulateur d'énergie (21) maintient fermement le mécanisme de coupe (2) dans la position normale de travail et réduit simultanément la pression avec laquelle ledit mécanisme de coupe (2) repose sur le sol.

Si, au cours du travail, le mécanisme de coupe (2) heurte un obstacle (ceci se traduit par une force (50) sur le mécanisme de coupe (2) - figure 7), il pivote vers l'arrière autour de l'axe (11A) de la troisième articulation (11). Ce faisant, le bras (46) tire sur la bielle (19) (vérin (48) bloqué) qui fait pivoter l'organe pivotant (17) autour de l'axe (18A) de la quatrième articulation (18) de sorte à allonger l'accumulateur d'énergie (21). Durant cette première phase, la pression dans l'accumulateur de pression (38) augmente. L'effort exercé par l'accumulateur d'énergie (21) sur l'organe pivotant (17) augmente proportionnellement de même que l'intensité de la force (50).

Il convient de noter que, durant cette première phase, la pression avec laquelle le mécanisme de coupe (2) repose sur le sol diminue certes, mais qu'il est avantageusement prévu que ledit mécanisme de coupe (2) reste en contact avec le sol.

Si l'obstacle peut être franchi au cours de cette première phase, l'accumulateur d'énergie (21) ramènera à nouveau le mécanisme de coupe (2) dans sa position normale de travail.

Si l'obstacle ne peut pas être franchi durant la première phase, le pivotement du mécanisme de coupe (2) vers l'arrière se poursuit jusqu'à ce que l'angle (51) atteigne une certaine valeur (qui est de 11° dans l'exemple représenté). La position de l'accumulateur d'énergie (21) et de la sixième articulation (23) juste avant d'avoir atteint l'angle limite est représentée en traits discontinus sur la figure 7.

Dès que l'angle limite est atteint, les galets (32, 33) roulent dans la rainure (24) et déplacent la sixième articulation (23) dans sa position la plus rapprochée de l'axe (18A) de la quatrième articulation (18). Cette position a été représentée en traits forts sur la figure 7. Dans cette nouvelle position, le bras de levier avec lequel agit l'accumulateur d'énergie (21) est plus réduit (dans l'exemple représenté, il a sensiblement été divisé par deux et est, dans la nouvelle position, du même ordre de grandeur que le bras de levier avec lequel agit la bielle (19) sur l'organe pivotant (17)). Ceci entraîne une redistribution des forces dans le dispositif (16) de sécurité et a pour conséquence une diminution importante de la force (50) nécessaire pour poursuivre l'effacement du mécanisme de coupe (2) devant l'obstacle par poursuite du pivotement vers l'arrière autour de l'axe (11A) de la troisième articulation (11). Le pivotement est stoppé lorsque le mécanisme de coupe (2) a atteint l'angle de déclenchement total (52) qui est déterminé par la face (53) de la butée (49) contre laquelle vient s'appuyer l'organe pivotant (17). Dans l'exemple représenté, cet angle de déclenchement total est d'environ 23°. Il convient par ailleurs de noter que par des choix judicieux de la position relative des diverses articulations du dispositif (16) de sécurité, la force (50) nécessaire pour poursuivre le pivotement du mécanisme de coupe (2) durant la deuxième phase peut demeurer au moins sensiblement constante, voire diminuer, bien que la pression dans l'accumulateur de pression (38) continue d'augmenter jusqu'à une certaine valeur limite. On comprendra que ceci est bénéfique pour la tenue des divers éléments de la machine.

Durant cette deuxième phase, l'effort exercé par l'accumulateur d'énergie (21) peut devenir suffisant pour décoller le mécanisme de coupe (2) du sol et le soulever de sorte qu'il puisse, selon la nature de l'obstacle, passer par-dessus celui-ci.

Dès que l'obstacle n'agit plus sur le mécanisme de coupe (2), l'énergie emmagasinée dans l'accumulateur d'énergie (21) provoque le raccourcissement de celui-ci. Ce faisant, l'accumulateur d'énergie (21) tire sur l'organe pivotant (17) qui, par réaction, tire sur la bielle (19) laquelle fait pivoter le mécanisme de coupe (2) autour de l'axe (11A) de la troisième articulation (11) jusque dans la position normale de travail. Simultanément, le mécanisme de coupe (2) revient au contact du sol. Etant donné que l'axe (24A) de la rainure (24) forme, avec la direction (27) de l'effort exercé par l'accumulateur d'énergie (21), un angle (28) quelque peu supérieur à 90°, on assure que la sixième articulation (23) retourne dans sa position normale de travail où elle est la plus éloignée de la quatrième articulation (18).

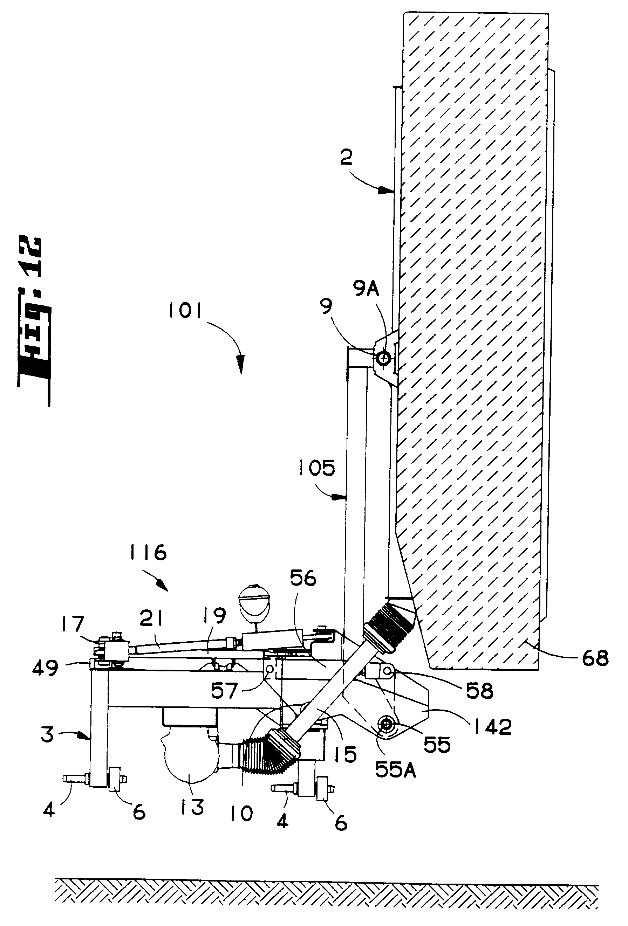

Lorsque le travail est terminé, la faucheuse (1) est mise en position de transport (figures 3 et 9). Pour ce faire, on alimente le vérin hydraulique (48) de sorte à l'allonger, ce qui a pour effet de faire pivoter quelque peu l'organe pivotant (17) autour de l'axe (18A) de la quatrième articulation (18) jusqu'au contact de la face (54) de la butée (49), et, par réaction, de pivoter la poutre porteuse (5), conjointement avec le mécanisme de coupe (2), vers l'arrière autour de l'axe (11A) de la troisième articulation (11). Dans l'exemple représenté, la position de transport est atteinte lorsque le vérin hydraulique (48) aura atteint sa longueur maximale. On pourrait toutefois très bien prévoir une butée destinée à déterminer cette position de transport. Le maintien du mécanisme de coupe (2) dans la position de transport est réalisé soit hydrauliquement au moyen du vérin (48), soit mécaniquement au moyen d'un verrou (non représenté) s'enclenchant automatiquement lorsque la position de transport est atteinte et qui peut être neutralisé par l'utilisateur depuis le véhicule moteur (7) à l'aide d'une commande à distance (non représentée) lorsque le mécanisme de coupe (2) doit être remis en position de travail. Etant donné que dans la position normale de travail la septième articulation (36) s'étend au-delà de la troisième articulation (11) du côté du mécanisme de coupe (2), on notera qu'à partir d'un certain angle de pivotement, l'accumulateur d'énergie (21) assiste également la mise en position de transport.

Dans la position de transport, le mécanisme de coupe (2) et la poutre porteuse (5) se trouvent derrière le véhicule moteur (7) dans le prolongement de celui-ci. Dans cette position, des butées (non représentées) peuvent bloquer la première articulation (9) et la deuxième articulation (10).

Il convient par ailleurs de noter que le pivotement du mécanisme de coupe (2) dans la position de transport ne nécessite pas de déposer l'arbre de transmission (15) à joints universels.

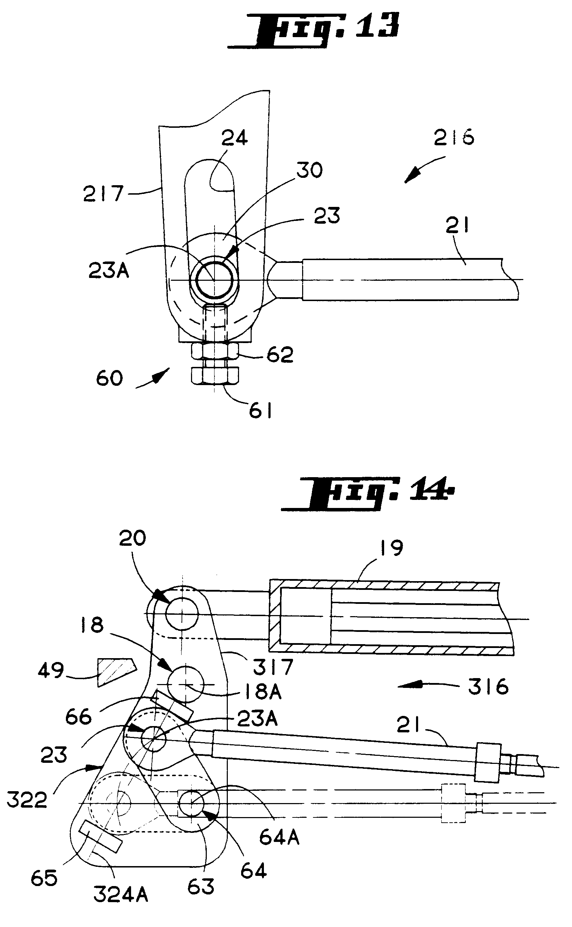

Les exemples de réalisation représentés sur les figures 10 à 14 comportent un certain nombre d'éléments qui ont été décrits précédemment. Ces éléments garderont en conséquence le même numéro de repère et ne seront pas redécrits. Ils comportent également un certain nombre d'éléments qui sont comparables à des éléments de la faucheuse de l'exemple précédent. Ces éléments seront affectés du même numéro de repère que ces éléments comparables de la faucheuse de l'exemple précédent augmenté de cent (figures 10 à 12), deux cents (figure 13) et trois cents (figure 14). Ils ne seront décrits que si cela s'avérait nécessaire.

Dans la faucheuse (101) des figures 10 à 12, la poutre porteuse (105) est liée à la structure d'attelage (3) au moyen d'une pièce intermédiaire (142). Cette pièce intermédiaire (142) est liée à la structure d'attelage (3) au moyen de la deuxième articulation (10) et de la troisième articulation (11). La poutre porteuse (105), quant à elle, est liée à cette pièce intermédiaire (142) au moyen d'une neuvième articulation (55), du type pivot, d'axe (55A) dirigé vers l'avant lorsque le mécanisme de coupe (2) est en position normale de travail (dans l'exemple de réalisation représenté, l'axe (55A) est au moins sensiblement parallèle à l'axe (10A) de la deuxième articulation (10)). En vue suivant la direction de travail (8), il apparaît du reste que la neuvième articulation (55) s'étend au moins sensiblement au même niveau, par rapport au sol, que la première articulation (9) et que la deuxième articulation (10). Il apparaît par ailleurs que la neuvième articulation (55) s'étend quelque peu au-dessus de la partie médiane de l'arbre de transmission télescopique (15) à joints universels.

La faucheuse (101) comporte par ailleurs un organe de manoeuvre (56) lié d'une part à la pièce intermédiaire (142) au moyen d'une dixième articulation (57) et d'autre part à la poutre porteuse (105) au moyen d'une onzième articulation (58). Dans l'exemple représenté, l'axe (57A) de la dixième articulation (57) et l'axe (58A) de la onzième articulation (58) sont au moins sensiblement parallèles à l'axe (55A) de la neuvième articulation (55). Cet organe de manoeuvre (56), réalisé sous forme de vérin hydraulique pouvant être animé au moyen d'une source hydraulique telle que la centrale hydraulique du véhicule moteur (7), permet de pivoter la poutre porteuse (105), conjointement avec le mécanisme de coupe (2), vers le haut autour de l'axe (55A) de la neuvième articulation (55), pour amener le mécanisme de coupe (2) dans une position de transport dans laquelle il est dirigé vers le haut (figure 12). Dans l'exemple représenté, le mécanisme de coupe (2) est au moins sensiblement vertical en position de transport. Il convient de noter que le pivotement du mécanisme de coupe (2) dans sa position de transport ne nécessite pas non plus de déposer l'arbre de transmission télescopique (15) à joints universels.

Il pourra, du reste, être avantageusement prévu qu'en position de transport, le pivotement du mécanisme de coupe (2) autour de l'axe (9A) de la première articulation (9) et le pivotement de la poutre porteuse (105) et de la pièce intermédiaire (142) autour de l'axe (10A) de la deuxième articulation (10) soient bloques. De préférence, ce blocage pourra se faire automatiquement lors du pivotement en position de transport.

Dans la position de travail, le pivotement de la poutre porteuse (105) et du mécanisme de coupe (2), par rapport à la pièce intermédiaire (142), autour de l'axe (55A) de la neuvième articulation (55) est bloqué au moins vers le bas. Ce blocage est réalisé vers le bas par une butée (59) solidaire de la pièce intermédiaire (142) et destinée à venir en contact avec la poutre porteuse (105). Si un blocage vers le haut est souhaité, celui-ci peut, par exemple, être assuré par le vérin hydraulique (double effet) constituant l'organe de manoeuvre (56). Ainsi, l'accumulateur d'énergie (21) qui est lié à la pièce intermédiaire (142) au moyen de la septième articulation (36), peut réduire la pression avec laquelle le mécanisme de coupe (2) repose sur le sol.

En ce qui concerne le dispositif (116) de sécurité celui-ci est identique à celui décrit précédemment sauf la bielle (119) qui est constituée ici d'un simple tirant.

La figure 13 montre une autre forme de réalisation d'un dispositif (216) de sécurité ou plus précisément un dispositif de réglage (60) permettant de régler la position normale de travail de la sixième articulation (23) par rapport à la quatrième articulation (18) de l'organe pivotant (217) qui est tout à fait comparable à l'organe pivotant (17) précédemment décrit.

Le dispositif de réglage (60) est constitué d'une vis (61) vissée dans l'organe pivotant (217) et contre laquelle s'appuie la rotule (30) de l'accumulateur d'énergie (21). En vissant plus ou moins profondément la vis (61) dans l'organe pivotant (217), on approche plus ou moins la sixième articulation (23) de la quatrième articulation (18). Le dispositif de réglage (60) comporte par ailleurs un contre-écrou (62) permettant de maintenir la position de la vis (61).

Grâce à ce dispositif de réglage (60), il est possible de régler l'intensité de l'effort initial qu'il est nécessaire d'appliquer sur le mécanisme de coupe (2) pour faire pivoter celui-ci vers l'arrière en cas de heurt d'un obstacle, sans que ce réglage ait une influence sur la valeur de la pression avec laquelle l'accumulateur d'énergie (21) laisse reposer le mécanisme de coupe (2) sur le sol.

La figure 14 montre, plus ou moins sous forme de schéma de principe, un autre exemple de réalisation d'un dispositif (316) de sécurité et plus précisément de la liaison (322) liant l'accumulateur d'énergie (21) à l'organe pivotant (317).

Dans cet exemple de réalisation, la liaison (322) comporte un levier pivotant (63) lié à l'une de ses extrémités à l'organe pivotant (317) au moyen d'une articulation (64), du type pivot, d'axe (64A) au moins sensiblement parallèle à l'axe (18A) de la quatrième articulation (18). A l'autre extrémité dudit levier pivotant (63) est lié l'accumulateur d'énergie (21) au moyen de la sixième articulation (23). Il apparaît du reste que la sixième articulation (23) s'étend au-delà de l'articulation (64) liant le levier pivotant (63) à l'organe pivotant (317).

La liaison (322) comporte par ailleurs deux butées (65, 66) entre lesquelles peut pivoter le levier pivotant (63). L'une (65) d'entre elles définit la position du levier pivotant (63) dans laquelle la sixième articulation (23) est éloignée de la quatrième articulation (18) (représentation en traits discontinus) et l'autre (66) définit la position du levier pivotant (63) dans laquelle la sixième articulation (23) est approchée de la quatrième articulation (18) (représentation en traits forts).

Il apparaît du reste que la droite (324A), passant d'une part par l'axe (23A) lorsque la sixième articulation (23) est éloignée de la quatrième articulation (18) et d'autre part par l'axe (23A) lorsque la sixième articulation (23) est approchée de la quatrième articulation (18), coupe au moins sensiblement l'axe (18A) de ladite quatrième articulation (18).

En position normale de travail, le levier pivotant (63) se trouve dans la position représentée en traits discontinus. Lorsque le mécanisme de coupe (2) a, suite à un heurt d'un obstacle, atteint l'angle limite (51) (figure 7), le levier pivotant (63) pivote dans la position représentée en traits forts. Il en découle un résultat identique à celui décrit précédemment.

Dans cet exemple de réalisation, la droite (324A) forme aussi avantageusement, en travail normal, un angle quelque peu supérieur à 90° avec la direction (27) de l'effort exercé par l'accumulateur d'énergie (21). Du reste, dans cette position, l'axe (11A) de la troisième articulation (11), l'axe (23A) de la sixième articulation (23) et l'axe (36A) de la septième articulation (36) sont aussi au moins sensiblement alignés.

Dans cet exemple de réalisation, on pourra bien évidemment également implanter le dispositif de réglage (60) décrit précédemment.

Sur les figures 1 à 3 et 10 à 12, il apparaît que le mécanisme de coupe (2) comporte un dispositif de protection (68). Celui-ci est représenté en traits discontinus sur les figures 1, 3 et 10 et en traits forts sur les figures 2, 11 et 12.

Diverses modifications peuvent être apportées aux exemples qui viennent d'être décrits, notamment en ce qui concerne la constitution des divers éléments ou par substitution d'équivalents techniques, sans pour autant sortir du domaine de protection.

C'est ainsi par exemple que l'accumulateur d'énergie pourrait être du type entièrement pneumatique ou mécanique (ressort).

Au lieu que le dispositif de sécurité fasse appel à un accumulateur d'énergie travaillant à la traction, il est également possible de prévoir un dispositif faisant appel à un accumulateur d'énergie travaillant en compression.

Dans les exemples décrits, le mécanisme de coupe est articulé à la poutre porteuse par une première articulation implantée dans sa partie médiane. Mais l'invention s'adresse également aux faucheuses dont la poutre porteuse est articulée à une extrémité du mécanisme de coupe.

Ce mécanisme de coupe peut d'ailleurs être d'un type quelconque destiné à la récolte des fourrages, à l'entretien d'espaces verts, au broyage de végétaux, etc.

Il est même possible de lui adjoindre des organes destinés à traiter le produit coupé, tels que des organes de conditionnement par exemple.

## Revendications

1. Faucheuse (1 ; 101) comportant :
- un mécanisme de coupe (2) s'étendant, au travail, transversalement à la direction de travail (8) ;
- une structure d'attelage (3) destinée à être liée à un véhicule moteur (7) ;
- une poutre porteuse (5; 105) liée d'une part au mécanisme de coupe (2) au moyen d'une première articulation (9) d'axe (9A) dirigé vers l'avant et d'autre part à la structure d'attelage (3) au moyen d'une deuxième articulation (10) d'axe (10A) dirigé vers l'avant et d'une troisième articulation (11) d'axe (11A) dirigé vers le haut, laquelle permet le pivotement de la deuxième articulation (10) par rapport à la structure d'attelage (3) ;
et
- un dispositif (16 ; 116 ; 216 ; 316) de sécurité maintenant le mécanisme de coupe (2) dans sa position normale de travail, mais autorisant le pivotement de ce dernier vers l'arrière autour de l'axe (11A) de la troisième articulation (11) en cas de heurt d'un obstacle, ce dispositif (16 ; 116 ; 216 ; 316) de sécurité comportant un accumulaieur d'énergie (21) et une bielle (19 ; 119) liée directement ou indirectement à la poutre porteuse (5 ; 105) ou au mécanisme de coupe (2) au moyen d'une huitième articulation (41), et par l'intermédiaire de laquelle l'accumulateur d'énergie (21) agit sur la poutre porteuse (5 ; 105) ou sur le mécanisme de coupe (2) ;
***caractérisée en ce*** **que :**
- ledit dispositif (16 ; 116 ; 216 ; 316) de sécurité comporte en sus un organe pivotant (17 ; 217 ; 317) lié à la structure d'attelage (3) au moyen d'une quatrième articulation (18);
- ladite bielle (19 ; 119) est liée d'une part directement ou indirectement à la poutre porteuse (5 ; 105) ou au mécanisme de coupe (2) avec un premier bras de levier par rapport à l'axe (11A) de la troisième articulation (11) et d'autre part à l'organe pivotant (17 ; 217 ; 317) au moyen d'une cinquième articulation (20) ;
- l'accumulateur d'énergie (21) est lié à l'organe pivotant (17 ; 217 ; 317) au moyen d'une liaison (22 ; 322) de telle sorte à agir sur l'organe pivotant (17 ; 217 ; 317) avec un second bras de levier, cette liaison (22 ; 322) qui comporte une sixième articulation (23), étant capable :
• de maintenir ladite sixième articulation (23) dans une première position éloignée de la quatrième articulation (18) jusqu'à un certain angle de pivotement (51) du mécanisme de coupe (2) vers l'arrière,
• de déplacer ladite sixième articulation (23) dans une deuxième position rapprochée de la quatrième articulation (18) à partir dudit angle de pivotement (51).

2. Faucheuse selon la revendication 1, ***caractérisée en ce*** que l'axe (23A) de la sixième articulation (23) est au moins sensiblement parallèle à l'axe (18A) de la quatrième articulation (18).

3. Faucheuse selon la revendication 1 ou 2, ***caractérisée en ce*** que ladite liaison (22) comporte en sus une rainure (24) permettant la modification de la position de ladite sixième articulation (23) par rapport à la quatrième articulation (18).

4. Faucheuse selon la revendication 3, ***caractérisée en ce*** que la liaison (22) comporte au moins un galet (32, 33) dont l'axe de rotation constitue l'axe (23A) de la sixième articulation (23) et qui roule dans la rainure (24).

5. Faucheuse selon la revendication 4, ***caractérisée en ce*** que ladite liaison (22) comporte au moins un galet (32, 33) de part et d'autre de la direction (27) de l'effort exercé par l'accumulateur d'énergie (21), lesdits galets (32, 33) roulant chacun sur une piste (34, 35) correspondante de la rainure (24).

6. Faucheuse selon la revendication 5, ***caractérisée en ce*** que lesdits galets (32, 33) s'étendent au moins sensiblement symétriquement de part et d'autre de la direction (27) de l'effort exercé par l'accumulateur d'énergie (21).

7. Faucheuse selon la revendication 1 ou 2, ***caractérisée en ce*** que ladite liaison (322) comporte en sus un levier pivotant (63) lié à l'organe pivotant (317) au moyen d'une articulation (64) et auquel est lié l'accumulateur d'énergie (21) au moyen de la sixième articulation (23) qui est prévue au-delà de ladite articulation (64), le pivotement dudit levier pivotant (63) par rapport à l'organe pivotant (317) autour de l'axe (64A) de ladite articulation (64) étant limité par deux butées (65, 66) solidaires de l'organe pivotant (317).

8. Faucheuse selon la revendication 7, ***caractérisée en ce*** que l'axe (64A) de ladite articulation (64) est au moins sensiblement parallèle à l'axe (18A) de la quatrième articulation (18).

9. Faucheuse selon une ou plusieurs des revendications 1 à 8, ***caractérisée en ce*** que la droite (24A ; 324A) passant d'une part par l'axe (23A) de la sixième articulation (23) lorsque celle-ci se trouve dans sa première position extrême et d'autre part par l'axe (23A) de la sixième articulation (23) lorsque celle-ci se trouve dans sa deuxième position extrême, coupe au moins sensiblement l'axe (18A) de la quatrième articulation (18.).

10. Faucheuse selon la revendication 9, ***caractérisée en ce*** que l'axe géométrique (26) coupant l'axe (18A) de la quatrième articulation (18) et l'axe (20A) de la cinquième articulation (20) forme un angle obtus (25) avec ladite droite (24A ; 324A).

11. Faucheuse selon la revendication 10, ***caractérisée en ce*** que, en travail normal, l'angle obtus (25) est ouvert vers le côté opposé à celui où s'étend le mécanisme de coupe (2).

12. Faucheuse selon une ou plusieurs des revendications 9 à 11, ***caractérisée en ce*** que, en travail normal, ladite droite (24A; 324A) forme, avec la direction (27) de l'effort exerce par l'accumulateur d'énergie (21), un angle (28) quel-que peu supérieur à 90°.

13. Faucheuse selon une ou plusieurs des revendications 1 à 12, ***caractérisée en ce*** que la position de travail normale de la sixième articulation (23) par rapport à la quatrième articulation (18) est réglable au moyen d'un dispositif de réglage (60).

14. Faucheuse selon la revendication 13, ***caractérisée en ce*** que le dispositif de réglage (60) règle essentiellement le bras de levier avec lequel agit l'accumulateur d'énergie (21) sur l'organe pivotant (217) (second bras de levier).

15. Faucheuse selon une ou plusieurs des revendication 1 à 14, ***caractérisée en ce*** que la direction (27) de l'effort exercé par l'accumulateur d'énergie (21) coupe au moins sensiblement orthogonalement l'axe (23A) de la sixième articulation (23).

16. Faucheuse selon une ou plusieurs des revendications 1 à 15, ***caractérisée en ce*** que l'axe (20A) de la cinquième articulation (20) cet au moins sensiblement parallèle à l'axe (18A) de la quatrième articulation (18),

17. Faucheuse selon une ou plusieurs des revendications 1 à 16, ***caractérisée en ce*** que l'accumulateur d'énergie (21) est lié directement ou indirectement à la structure d'attelage (3) ou à la poutre porteuse (5 ; 105) ou au mécanisme de coupe (2) au moyen d'une septième articulation (36).

18. Faucheuse selon la revendication 17, ***caractérisée en ce*** que l'axe (36A) de la septième articulation (36) est au moins sensiblement parallèle à l'axe (18A) de la quatrième articulation (18).

19. Faucheuse selon la revendication 17 ou 18, ***caractérisée en ce*** que la septième articulation (36) s'étend dans le voisinage de la troisième articulation (11).

20. Faucheuse selon la revendication 19, ***caractérisée en ce*** que la septième articulation (36) s'étend au-delà de la troisième articulation (11), du côté du mécanisme de coupe (2).

21. Faucheuse selon une ou plusieurs des revendications 17 à 20, ***caractérisée en ce*** que, en position de travail normale, l'axe (11A) de la troisième articulation (11), l'axe (23A) de la sixième articulation (23) et l'axe (36A) de la septième articulation (36) sont au moins sensiblement alignés.

22. Faucheuse selon une ou plusieurs des revendications 1 à 21, ***caractérisée en ce*** que l'axe (41A) de la huitième articulation (41) est au moins sensiblement parallèle à l'axe (18A) de la quatrième articulation (18).

23. Faucheuse selon la revendication 22, ***caractérisée en ce*** que l'axe géométrique coupant l'axe (11A) de la troisième articulation (11) et l'axe (41A) de la huitième articulation (41) forme un angle obtus (67) avec l'axe longitudinal du mécanisme de coupe (2).

24. Faucheuse selon une ou plusieurs des revendications 1 à 23, ***caractérisée en ce*** que l'axe (18A) de la quatrième articulation (18) est dirigé vers le haut, de préférence au moins sensiblement verticalement.

25. Faucheuse selon la revendication 24, ***caractérisée en ce*** que l'axe (18A) de la quatrième articulation (18) est au moins sensiblement parallèle à l'axe (11A) de la troisième articulation (11).

26. Faucheuse selon une ou plusieurs des revendications 1 à 25, ***caractérisée en ce*** que, en position normale de travail, l'accumulateur d'énergie (21) et la bielle (19 ; 119) s'étendent transversalement à la direction de travail (8), de préférence au moins sensiblement parallèlement au mécanisme de coupe (2).

27. Faucheuse selon une ou plusieurs des revendications 1 à 26, ***caractérisée en ce*** que l'organe pivotant (17; 217; 317) peut pivoter autour de l'axe (18A) de la quatrième articulation (18) suivant une certaine plage angulaire déterminée.

28. Faucheuse selon la revendication 27, ***caractérisée en ce*** que ladite plage angulaire est déterminée par des butées (49-53; 49-54) solidaires de la structure d'attelage (3) et destinées à collaborer avec l'organe pivotant (17 ; 217 ; 317).

29. Faucheuse selon une ou plusieurs des revendications 1 à 28, ***caractérisée en ce*** que la deuxième articulation (10) et la troisième articulation (11) s'étendent dans le voisinage l'une de l'autre, leurs axes (10A, 11A) étant de préférence sécants.

30. Faucheuse selon une ou plusieurs des revendications 1 à 29, ***caractérisée en ce*** que l'angle de pivotement (51) du mécanisme de coupe (2) à partir duquel le bras de levier avec lequel agit l'accumulateur d'énergie (21) sur l'organe pivotant (17 ; 217 ; 317) (second bras le levier) est diminué, a une valeur d'une dizaine de degrés environ.

31. Faucheuse selon une ou plusieurs des revendications 1 à 30, ***caractérisée en ce*** que l'accumulateur d'énergie (21) comporte un vérin (37) et un accumulateur de pression (38).

32. Faucheuse selon la revendication 31, ***caractérisée en ce*** que la pression de gonflage de l'accumulateur de pression (38) est réglable.

33. Faucheuse selon une ou plusieurs des revendications 1 à 32, ***caractérisée en ce que*** la bielle (19) est constituée d'un vérin (48).

34. Faucheuse selon la revendication 33, ***caractérisée en ce*** que le pivotement du mécanisme de coupe (2) vers l'avant ou vers l'avant et vers l'arrière autour de l'axe (11A) de la troisième articulation (11) est limité par une butée respective.

35. Faucheuse selon la revendication 33 ou 34, ***caractérisée en ce*** que, en position de transport, le pivotement du mécanisme de coupe (2) autour de l'axe (9A) de la première articulation (9) et le pivotement de la poutre porteuse (5) autour de l'axe (10A) de la deuxième articulation (10) sont bloqués.

36. Faucheuse selon une ou plusieurs des revendications 1 à 35, ***caractérisée en ce*** que l'accumulateur d'énergie (21) est lié directement ou indirectement à la poutre porteuse (5 ; 105) ou au mécanisme de coupe (2) au moyen d'une septième articulation (36) dont la position par rapport à la deuxième articulation (10) est telle que ledit accumulateur d'énergie (21) réduise la pression avec laquelle le mécanisme de coupe (2) repose au sol.

37. Faucheuse selon une ou plusieurs des revendications 1 à 36, ***caractérisée en ce*** que la poutre porteuse (105) est liée à la structure d'attelage (3) au moyen d'une pièce intermédiaire (142) elle-même liée à la structure d'attelage (3) au moyen de la deuxième articulation (10), la poutre porteuse (105) étant liée à cette pièce intermédiaire (142) au moyen d'une neuvième articulation (55) d'axe (55A) dirigé vers l'avant.

38. Faucheuse selon la revendication 37, ***caractérisée en ce*** que l'accumulateur d'énergie (21) est lié directement ou indirectement à la pièce intermédiaire (142) au moyen d'une septième articulation (36) et que le pivotement de la poutre porteuse (105) par rapport à la pièce intermédiaire (142) autour de l'axe (55A) de la neuvième articulation (55) est limité au moins vers le bas par une butée (59).

39. Faucheuse selon la revendication 37 ou 38, ***caractérisée en ce*** qu'il est prévu un organe de manoeuvre (56) implanté entre la pièce intermédiaire (142) et la poutre porteuse (105) pour faire pivoter la poutre porteuse (105) et le mécanisme de coupe (2) vers le haut autour de l'axe (55A) de la neuvième articulation (55).

40. Faucheuse selon la revendication 39, ***caractérisée en ce*** que l'organe de manoeuvre (56) est constitué d'un verin.

41. Faucheuse selon une ou plusieurs des revendications 1 à 40, ***caractérisée en ce*** que l'axe (9A) de la première articulation (9) et/ou l'axe (10A) de la deuxième articulation (10) et/ou l'axe (554) de la neuvième articulation (55) est (sont) au moins sensiblement dirigé(s) suivant la direction de travail (8),

## Claims

1. Mower (1; 101) comprising:
- a cutting mechanism (2) extending, during work, transversely to the direction of work (8);
- a hitching structure (3) intended to be connected to a motor vehicle (7);
- a carrying beam (5; 105) connected, on the one hand, to the cutting mechanism (2) by means of a first articulation (9), the axis (9A) of which is directed forwards and, on the other hand, to the hitching structure (3) by means of a second articulation (10), the axis (10A) of which is directed forwards and a third articulation (11), the axis (11A) of which is directed upwards, which allows the second articulation (10) to pivot with respect to the hitching structure (3); and
- a safety device (16; 116; 216; 316) keeping the cutting mechanism (2) in its normal work position but allowing it to pivot backwards about the axis (11A) of the third articulation (11) should an obstacle be encountered, this safety device (16; 116; 216; 316) comprising an energy accumulator (21) and a connecting rod (19; 119) connected directly or indirectly to the carrying beam (5; 105) or to the cutting mechanism (2) by means of an eighth articulation (41), and by means of which the energy accumulator (21) acts on the carrying beam (5; 105) or on the cutting mechanism (2);
***characterized in*** that:
- the said safety device (16; 116; 216; 316) additionally comprises a pivoting member (17; 217; 317) connected to the hitching structure (3) by means of a fourth articulation (18);
- the said connecting rod (19; 119) is connected, on the one hand, directly or indirectly to the carrying beam (5; 105) or to the cutting mechanism (2) with a first lever arm with respect to the axis (11A) of the third articulation (11) and, on the other hand, to the pivoting member (17; 217; 317) by means of a fifth articulation (20);
- the energy accumulator (21) is connected to the pivoting member (17; 217; 317) by means of a link (22; 322) so as to act on the pivoting member (17; 217; 317) with a second lever arm, this link (22; 322), which comprises a sixth articulation (23), being capable:
• of keeping the said sixth articulation (23) in a first position away from the fourth articulation (18) until the cutting mechanism (2) has pivoted backwards to a certain angle of pivoting (51),
• of moving the said sixth articulation (23) into a second position closer to the fourth articulation (18) once the said angle of pivoting (51) has been exceeded.

2. Mower according to Claim 1, ***characterized in*** that the axis (23A) of the sixth articulation (23) is at least substantially parallel to the axis (18A) of the fourth articulation (18).

3. Mower according to Claim 1 or 2, ***characterized in*** that the said link (22) additionally has a slot (24) allowing the position of the said sixth articulation (23) with respect to the fourth articulation (18) to be altered.

4. Mower according to Claim 3, ***characterized in*** that the link (22) comprises at least one roller (32, 33), the axis of rotation of which constitutes the axis (23A) of the sixth articulation (23) and which runs in the slot (24).

5. Mower according to Claim 4, ***characterized in*** that the said link (22) comprises at least one roller (32, 33) on each side of the direction (27) of the force exerted by the energy accumulator (21), the said rollers (32, 33) each running along a corresponding runway (34, 35) of the slot (24).

6. Mower according to Claim 5, ***characterized in*** that the said rollers (32, 33) extend at least substantially symmetrically on each side of the direction (27) of the force exerted by the energy accumulator (21).

7. Mower according to Claim 1 or 2, ***characterized in*** that the said link (322) additionally comprises a pivoting lever (63) connected to the pivoting member (317) by means of an articulation (64) and to which the energy accumulator (21) is connected by means of the sixth articulation (23) which is provided beyond the said articulation (64), the pivoting of the said pivoting lever (63) with respect to the pivoting member (317) about the axis (64A) of the said articulation (64) being limited by two stops (65, 66) secured to the pivoting member (317).

8. Mower according to Claim 7, ***characterized in*** that the axis (64A) of the said articulation (64) is at least substantially parallel to the axis (18A) of the fourth articulation (18).

9. Mower according to one or more of Claims 1 to 8, ***characterized in*** that the straight line (24A; 324A) passing, on the one hand, through the axis (23A) of the sixth articulation (23) when the latter is in its first extreme position and, on the other hand, through the axis (23A) of the sixth articulation (23) when the latter is in its second extreme position, at least substantially intersects the axis (18A) of the fourth articulation (18).

10. Mower according to Claim 9, ***characterized in*** that the geometric axis (26) intersecting the axis (18A) of the fourth articulation (18) and the axis (20A) of the fifth articulation (20) forms an obtuse angle (25) with the said straight line (24A; 324A).

11. Mower according to Claim 10, ***characterized in*** that, in normal work, the obtuse angle (25) faces away from the side on which the cutting mechanism (2) lies.

12. Mower according to one or more of Claims 9 to 11, ***characterized in*** that, in normal work, the said straight line (24A; 324A) forms an angle (28) somewhat greater than 90° with the direction (27) of the force exerted by the energy accumulator (21).

13. Mower according to one or more of Claims 1 to 12, ***characterized in*** that the normal work position of the sixth articulation (23) with respect to the fourth articulation (18) is adjustable by means of an adjusting device (60).

14. Mower according to Claim 13, ***characterized in*** that the adjusting device (60) essentially adjusts the lever arm with which the energy accumulator (21) acts on the pivoting member (217) (second lever arm).

15. Mower according to one or more of Claims 1 to 14, ***characterized in*** that the direction (27) of the force exerted by the energy accumulator (21) intersects the axis (23A) of the sixth articulation (23) at least substantially at right angles.

16. Mower according to one or more of Claims 1 to 15, ***characterized in*** that the axis (20A) of the fifth articulation (20) is at least substantially parallel to the axis (18A) of the fourth articulation (18).

17. Mower according to one or more of Claims 1 to 16, ***characterized in*** that the energy accumulator (21) is connected directly or indirectly to the hitching structure (3) or to the carrying beam (5; 105) or to the cutting mechanism (2) by means of a seventh articulation (36).

18. Mower according to Claim 17, ***characterized in*** that the axis (36A) of the seventh articulation (36) is at least substantially parallel to the axis (18A) of the fourth articulation (18).

19. Mower according to Claim 17 or 18, ***characterized in*** in that the seventh articulation (36) extends near to the third articulation (11).

20. Mower according to Claim 19, ***characterized in*** that the seventh articulation (36) extends beyond the third articulation (11), on the same side as the cutting mechanism (2).

21. Mower according to one or more of Claims 17 to 20, ***characterized in*** that, in the normal work position, the axis (11A) of the third articulation (11), the axis (23A) of the sixth articulation (23) and the axis (36A) of the seventh articulation (36) are at least substantially aligned.

22. Mower according to one or more of Claims 1 to 21, ***characterized in*** that the axis (41A) of the eighth articulation (41) is at least substantially parallel to the axis (18A) of the fourth articulation (18).

23. Mower according to Claim 22, ***characterized in*** that the geometric axis intersecting the axis (11A) of the third articulation (11) and the axis (41A) of the eighth articulation (41) forms an obtuse angle (67) with the longitudinal axis of the cutting mechanism (2).

24. Mower according to one or more of Claims 1 to 23, ***characterized in*** that the axis (18A) of the fourth articulation (18) is directed upwards, preferably at least substantially vertically.

25. Mower according to Claim 24, ***characterized in*** that the axis (18A) of the fourth articulation (18) is at least substantially parallel to the axis (11A) of the third articulation (11).

26. Mower according to one or more of Claims 1 to 25, ***characterized in*** that, in the normal work position, the energy accumulator (21) and the connecting rod (19; 119) extend transversely to the direction of work (8), preferably at least substantially parallel to the cutting mechanism (2).

27. Mower according to one or more of Claims 1 to 26, ***characterized in*** that the pivoting member (17; 217; 317) can pivot about the axis (18A) of the fourth articulation (18) through a certain predetermined angular range.

28. Mower according to Claim 27, ***characterized in*** that the said angular range is determined by stops (49-53; 49-54) secured to the hitching structure (3) and intended to collaborate with the pivoting member (17; 217; 317).

29. Mower according to one or more of Claims 1 to 28, ***characterized in*** that the second articulation (10) and the third articulation (11) extend near to one another, their axes (10A, 11A) preferably being secant.

30. Mower according to one or more of Claims 1 to 29, ***characterized in*** that the angle of pivoting (51) of the cutting mechanism (2) beyond which the lever arm with which the energy accumulator (21) acts on the pivoting member (17; 217; 317) (second lever arm) is reduced, has a value of about 10°.

31. Mower according to one or more of Claims 1 to 30, ***characterized in*** that the energy accumulator (21) comprises a ram (37) and a pressure accumulator (38).

32. Mower according to Claim 31, ***characterized in*** that the inflation pressure of the pressure accumulator (38) is adjustable.

33. Mower according to one or more of Claims 1 to 32, ***characterized in*** that the connecting rod (19) consists of a ram (48).

34. Mower according to Claim 33, ***characterized in*** that the forwards or forwards-and-backwards pivoting of the cutting mechanism (2) about the axis (11A) of the third articulation (11) is limited by a respective stop.

35. Mower according to Claim 33 or 34, ***characterized in*** that, in the transport position, the pivoting of the cutting mechanism (2) about the axis (9A) of the first articulation (9) and the pivoting of the carrying beam (5) about the axis (10A) of the second articulation (10) are prevented.

36. Mower according to one or more of Claims 1 to 35, ***characterized in*** that the energy accumulator (21) is connected directly or indirectly to the carrying beam (5; 105) or to the cutting mechanism (2) by means of a seventh articulation (36) whose position with respect to the second articulation (10) is such that the said energy accumulator (21) reduces the pressure with which the cutting mechanism (2) rests on the ground.

37. Mower according to one or more of Claims 1 to 36, ***characterized in*** that the carrying beam (105) is connected to the hitching structure (3) by means of an intermediate part (142) itself connected to the hitching structure (3) by means of the second articulation (10), the carrying beam (105) being connected to this intermediate part (142) by means of a ninth articulation (55), the axis (55A) of which is directed forwards.

38. Mower according to Claim 37, ***characterized in*** that the energy accumulator (21) is connected directly or indirectly to the intermediate part (142) by means of a seventh articulation (36) and that the pivoting of the carrying beam (105) with respect to the intermediate part (142) about the axis (55A) of the ninth articulation (55) is limited, at least downwards, by a stop (59).

39. Mower according to Claim 37 or 38, ***characterized in*** that an operating member (56) is installed between the intermediate part (142) and the carrying beam (105) to cause the carrying beam (105) and the cutting mechanism (2) to pivot upwards about the axis (55A) of the ninth articulation (55).

40. Mower according to Claim 39, ***characterized in*** that the operating member (56) consists of a ram.

41. Mower according to one or more of Claims 1 to 40, ***characterized in*** that the axis (9A) of the first articulation (9) and/or the axis (10A) of the second articulation (10) and/or the axis (55A) of the ninth articulation (55) is(are) at least substantially directed in the direction of work (8).

## Patentansprüche

1. Mähmaschine (1; 101), die
- einen Schneidmechanismus (2), der sich im Betrieb quer zur Arbeitsrichtung (8) erstreckt;
- eine Kupplungsvorrichtung (3) zur Verbindung mit einem Motorfahrzeug (7);
- einen Träger (5; 105), der einerseits mittels eines ersten Gelenks (9) mit einer nach vorne ausgerichteten Achse (9A) mit dem Schneidmechanismus (2) und andererseits mittels eines zweiten Gelenks (10) mit einer nach vorne ausgerichteten Achse (10A) und eines dritten Gelenks (11) mit einer nach oben ausgerichteten Achse (11A), das das Schwenken des zweiten Gelenks (10) bezüglich der Kupplungsvorrichtung (3) gestattet, mit der Kupplungsvorrichtung (3) verbunden ist; und
- eine Sicherheitsvorrichtung (16; 116; 216; 316), die den Schneidmechanismus (2) in seiner normalen Arbeitsstellung hält, aber sein Schwenken nach hinten um die Achse (11A) des dritten Gelenks (11) bei Auftreffen auf ein Hindernis gestattet, wobei diese Sicherheitsvorrichtung (16; 116; 216; 316) einen Energiespeicher (21) und eine Stange (19; 119) aufweist, die mittels eines achten Gelenks (41) direkt oder indirekt mit dem Träger (5; 105) oder dem Schneidmechanismus (2) verbunden ist und mittels der der Energiespeicher (21) auf den Träger (5; 105) oder auf den Schneidmechanismus (2) einwirkt, umfaßt;
***dadurch gekennzeichnet,*** daß
- die Sicherheitsvorrichtung (16; 116; 216; 316) des weiteren ein Schwenkglied (17; 217; 317) aufweist, das mittels eines vierten Gelenks (18) mit der Kupplungsvorrichtung (3) verbunden ist;
- die Stange (19; 119) einerseits direkt oder indirekt mit dem Träger (5; 105) oder dem Schneidmechanismus (2) mit einem ersten Hebelarm bezüglich der Achse (11A) des dritten Gelenks (11) und andererseits mittels eines fünften Gelenks (20) mit dein Schwenkglied (17; 217; 317) verbunden ist;
- der Energiespeicher (21) mittels einer Verbindung (22; 322) derart mit dem Schwenkglied (17; 217; 317) verbunden ist, daß er mit einem zweiten Hebelarm auf das Schwenkglied (17; 217; 317) einwirkt, wobei diese Verbindung (22; 322), die ein sechstes Gelenk (23) aufweist, zu folgendem in der Lage ist:
- das sechste Gelenk (23) in einer von dein vierten Gelenk (18) entfernt liegenden ersten Position zu halten bis zu einem bestimmten Winkel (51) des Nachhintenschwenkens des Schneidmechanismus (2),
- das sechste Gelenk (23) von dem Schwenkwinkel (51) aus in eine an das vierte Gelenk (18) angenäherte zweite Position zu bewegen.

2. Mähmaschine nach Anspruch 1, ***dadurch gekennzeichnet,*** daß die Achse (23A) des sechsten Gelenks (23) zumindest im wesentlichen parallel zur Achse (18A) des vierten Gelenks (18) verläuft.

3. Mähmaschine nach Anspruch 1 oder 2, ***dadurch gekennzeichnet,*** daß die Verbindung (22) des weiteren eine Nut (24) aufweist, die die Änderung der Position des sechsten Gelenks (23) bezüglich des vierten Gelenks (18) gestattet.

4. Mähmaschine nach Anspruch 3, ***dadurch gekennzeichnet,*** daß die Verbindung (22) mindestens eine Rolle (32, 33) aufweist, deren Drehachse die Achse (23A) des sechsten Gelenks (23) bildet und die in der Nut (24) rollt.

5. Mähmaschine nach Anspruch 4, ***dadurch gekennzeichnet,*** daß die Verbindung (22) mindestens eine Rolle (32, 33) auf beiden Seiten der Richtung (27) der von dem Energiespeicher (21) ausgeübten Kraft aufweist, wobei die Rollen (32, 33) jeweils über eine dazugehörige Bahn (34, 35) der Nut (24) rollen.

6. Mähmaschine nach Anspruch 5, ***dadurch gekennzeichnet,*** daß sich die Rollen (32, 33) zumindest im wesentlichen symmetrisch auf beiden Seiten der Richtung (27) der von dem Energiespeicher (21) ausgeübten Kraft erstrecken.

7. Mähmaschine nach Anspruch 1 oder 2, ***dadurch gekennzeichnet,*** daß die Verbindung (322) des weiteren einen Schwenkhebel (63) aufweist, der mittels eines Gelenks (64) mit dem Schwenkglied (317) verbunden ist und mit dem der Energiespeicher (21) mittels des sechsten Gelenks (23) verbunden ist, das jenseits des Gelenks (64) vorgesehen ist, wobei das Schwenken des Schwenkhebels (63) bezüglich des Schwenkglieds (317) um die Achse (64A) des Gelenks (64) durch zwei fest mit dem Schwenkglied (317) verbundene Anschläge (65, 66) begrenzt wird.

8. Mähmaschine nach Anspruch 7, ***dadurch gekennzeichnet,*** daß die Achse (64A) des Gelenks (64) zumindest im wesentlichen parallel zur Achse (18A) des vierten Gelenks (18) verläuft.

9. Mähmaschine nach einem oder mehreren der Ansprüche 1 bis 8, ***dadurch gekennzeichnet,*** daß die Gerade (24A; 324A), die einerseits die Achse (23A) des sechsten Gelenks (23) durchquert, wenn sich dieses in seiner ersten Endposition befindet, und andererseits die Achse (23A) des sechsten Gelenks (23) durchquert, wenn sich dieses in seiner zweiten Endposition befindet, zumindest im wesentlichen die Achse (18A) des vierten Gelenks (18) schneidet.

10. Mähmaschine nach Anspruch 9, ***dadurch gekennzeichnet,*** daß die geometrische Achse (26), die die Achse (18A) des vierten Gelenks (18) und die Achse (20A) des fünften Gelenks (20) schneidet, mit der Geraden (24A; 324A) einen stumpfen Winkel (25) bildet.

11. Mähmaschine nach Anspruch 10, ***dadurch gekennzeichnet,*** daß sich der stumpfe Winkel (25) im Normalbetrieb zu der Seite öffnet, die der Seite, auf der sich der Schneidmechanismus (2) erstreckt, gegenüberliegt.

12. Mähmaschine nach einem oder mehreren der Ansprüche 9 bis 11, ***dadurch gekennzeichnet,*** daß die Gerade (24A; 324A) im Normalbetrieb mit der Richtung (27) der von dem Energiespeicher (21) ausgeübten Kraft einen Winkel (28) von etwas über 90° bildet.

13. Mähmaschine nach einem oder mehreren der Ansprüche 1 bis 12, ***dadurch gekennzeichnet,*** daß die normale Arbeitsstellung des sechsten Gelenks (23) bezüglich des vierten Gelenks (18) mittels einer Einstellvorrichtung (60) einstellbar ist.

14. Mähmaschine nach Anspruch 13, ***dadurch gekennzeichnet,*** daß die Einstellvorrichtung (60) im wesentlichen den Hebelarm, mit dem der Energiespeicher (21) auf das Schwenkglied (217) einwirkt (zweiter Hebelarm), einstellt.

15. Mähmaschine nach einem oder mehreren der Ansprüche 1 bis 14, ***dadurch gekennzeichnet,*** daß die Richtung (27) der von dem Energiespeicher (21) ausgeübten Kraft die Achse (23A) des sechsten Gelenks (23) zumindest im wesentlichen orthogonal schneidet.

16. Mähmaschine nach einem oder mehreren der Ansprüche 1 bis 15, ***dadurch gekennzeichnet,*** daß die Achse (20A) des fünften Gelenks (20) zumindest im wesentlichen parallel zur Achse (18A) des vierten Gelenks (18) verläuft.

17. Mähmaschine nach einem oder mehreren der Ansprüche 1 bis 16, ***dadurch gekennzeichnet,*** daß der Energiespeicher (21) mittels eines siebten Gelenks (36) direkt oder indirekt mit der Kupplungsvorrichtung (3) oder dem Träger (5; 105) oder dem Schneidmechanismus (2) verbunden ist.

18. Mähmaschine nach Anspruch 17, ***dadurch gekennzeichnet,*** daß die Achse (36A) des siebten Gelenks (36) zumindest im wesentlichen parallel zur Achse (18A) des vierten Gelenks (18) verläuft.

19. Mähmaschine nach Anspruch 17 oder 18, ***dadurch gekennzeichnet,*** daß sich das siebte Gelenk (36) in der Nähe des dritten Gelenks (11) erstreckt.

20. Mähmaschine nach Anspruch 19, ***dadurch gekennzeichnet,*** daß sich das siebte Gelenk (36) jenseits des dritten Gelenks (11) auf der Seite des Schneidmechanismus (2) erstreckt.

21. Mähmaschine nach einem oder mehreren der Ansprüche 17 bis 20, ***dadurch gekennzeichnet,*** daß die Achse (11A) des dritten Gelenks (11), die Achse (23A) des sechsten Gelenks (23) und die Achse (36A) des siebten Gelenks (36) in normaler Arbeitsstellung zumindest im wesentlichen aufeinander ausgerichtet sind.

22. Mähmaschine nach einem oder mehreren der Ansprüche 1 bis 21, ***dadurch gekennzeichnet,*** daß die Achse (41A) des achten Gelenks (41) zumindest im wesentlichen parallel zur Achse (18A) des vierten Gelenks (18) verläuft.

23. Mähmaschine nach Anspruch 22, ***dadurch gekennzeichnet,*** daß die geometrische Achse, die die Achse (11A) des dritten Gelenks (11) und die Achse (41A) des achten Gelenks (41) schneidet, mit der Längsachse des Schneidmechanismus (2) einen stumpfen Winkel (67) bildet.

24. Mähmaschine nach einem oder mehreren der Ansprüche 1 bis 23, ***dadurch gekennzeichnet,*** daß die Achse (18A) des vierten Gelenks (18) nach oben, vorzugsweise zumindest im wesentlichen vertikal, ausgerichtet ist.

25. Mähmaschine nach Anspruch 24, ***dadurch gekennzeichnet,*** daß die Achse (18A) des vierten Gelenks (18) zumindest im wesentlichen parallel zur Achse (11A) des dritten Gelenks (11) ausgerichtet ist.

26. Mähmaschine nach einem oder mehreren der Ansprüche 1 bis 25, ***dadurch gekennzeichnet,*** daß sich der Energiespeicher (21) und die Stange (19; 119) in normaler Arbeitsstellung quer zur Arbeitsrichtung (8), vorzugsweise zumindest im wesentlichen parallel zum Schneidmechanismus (2), erstrecken.

27. Mähmaschine nach einem oder mehreren der Ansprüche 1 bis 26, ***dadurch gekennzeichnet,*** daß das Schwenkglied (17; 217; 317) gemäß einem festgelegten Winkelbereich um die Achse (18A) des vierten Gelenks (18) schwenken kann.

28. Mähmaschine nach Anspruch 27, ***dadurch gekennzeichnet,*** daß der Winkelbereich durch fest mit der Kupplungsvorrichtung (3) verbundene Anschläge (49 - 53; 49 - 54), die mit dem Schwenkglied (17; 217; 317) zusammenwirken sollen, festgelegt wird.

29. Mähmaschine nach einem oder mehreren der Ansprüche 1 bis 28, ***dadurch gekennzeichnet,*** daß sich das zweite Gelenk (10) und das dritte Gelenk (11) in der Nähe voneinander erstrecken, wobei ihre Achsen (10A, 11A) sich vorzugsweise schneiden.

30. Mähmaschine nach einem oder mehreren der Ansprüche 1 bis 29, ***dadurch gekennzeichnet,*** daß der Schwenkwinkel (51) des Schneidmechanismus (2), von dem aus der Hebelarm, mit dem der Energiespeicher (21) auf das Schwenkglied (17; 217; 317) einwirkt (zweiter Hebelarm), verkleinert wird, einen Wert von ungefähr zehn Grad aufweist.

31. Mähmaschine nach einem oder mehreren der Ansprüche 1 bis 30, ***dadurch gekennzeichnet,*** daß der Energiespeicher (21) einen Druckzylinder (37) und einen Druckspeicher (38) umfaßt.

32. Mähmaschine nach Anspruch 31, ***dadurch gekennzeichnet,*** daß der Fülldruck des Druckspeichers (38) einstellbar ist.

33. Mähmaschine nach einem oder mehreren der Ansprüche 1 bis 32, ***dadurch gekennzeichnet,*** daß die Stange (19) von einem Zylinder (48) gebildet wird.

34. Mähmaschine nach Anspruch 33, ***dadurch gekennzeichnet,*** daß das Schwenken des Schneidmechanismus (2) nach vorne oder nach vorne und nach hinten um die Achse (11A) des dritten Gelenks (11) durch einen jeweiligen Anschlag begrenzt wird.

35. Mähmaschine nach Anspruch 33 oder 34, ***dadurch gekennzeichnet,*** daß das Schwenken des Schneidmechanismus (2) um die Achse (9A) des ersten Gelenks (9) und das Schwenken des Trägers (5) um die Achse (10A) des zweiten Gelenks (10) in Transportstellung gesperrt sind.

36. Mähmaschine nach einem oder mehreren der Ansprüche 1 bis 35, ***dadurch gekennzeichnet,*** daß der Energiespeicher (21) mittels eines siebten Gelenks (36), dessen Position bezüglich des zweiten Gelenks (10) derart ist, daß der Energiespeicher (21) den Druck vermindert, mit dem der Schneidmechanismus (2) auf dem Boden ruht, direkt oder indirekt mit dem Träger (5; 105) oder dem Schneidmechanismus (2) verbunden ist.

37. Mähmaschine nach einem oder mehreren der Ansprüche 1 bis 36, ***dadurch gekennzeichnet,*** daß der Träger (105) mittels eines Zwischenteils (142) mit der Kupplungsvorrichtung (3) verbunden ist, das selbst mittels des zweiten Gelenks (10) mit der Kupplungsvorrichtung (3) verbunden ist, wobei der Träger (105) mittels eines neunten Gelenks (55) mit einer nach vorne ausgerichteten Achse (55A) mit diesem Zwischenteil (142) verbunden ist.

38. Mähmaschine nach Anspruch 37, ***dadurch gekennzeichnet,*** daß der Energiespeicher (21) mittels eines siebten Gelenks (36) direkt oder indirekt mit dem Zwischenteil (142) verbunden ist und daß das Schwenken des Trägers (105) bezüglich des Zwischenteils (142) um die Achse (55A) des neunten Gelenks (55) durch einen Anschlag (59) zumindest nach unten begrenzt wird.

39. Mähmaschine nach Anspruch 37 oder 38, ***dadurch gekennzeichnet,*** daß ein Manövrierteil (56) zwischen dem Zwischenteil (142) und dem Träger (105) angebracht ist, um den Träger (105) und den Schneidmechanismus (2) um die Achse (55A) des neunten Gelenks (55) nach oben zu schwenken.

40. Mähmaschine nach Anspruch 39, ***dadurch gekennzeichnet,*** daß das Manövrierteil (56) von einem Druckzylinder gebildet wird.

41. Mähmaschine nach einem oder mehreren der Ansprüche 1 bis 40, ***dadurch gekennzeichnet,*** daß die Achse (9A) des ersten Gelenks (9) und/oder die Achse (10A) des zweiten Gelenks (10) und/oder die Achse (55A) des neunten Gelenks (55) zumindest im wesentlichen in Arbeitsrichtung (8) ausgerichtet ist (sind).
